# EUROPEAN PATENT SPECIFICATION

(11) **EP 4 193 161 B1**
(45) Date of publication and mention of the grant of the patent: **04.11.2026**
(21) Application number: 21755283.5
(22) Date of filing: 23.07.2021
(51) Int. Cl.: G01S 5/00, G01S 5/02

(54) **LOCATION SUPPORT FOR A WIRELESS AERIAL MOBILE DEVICE**
STANDORTUNTERSTÜTZUNG FÜR EINE DRAHTLOSE MOBILE ANTENNENVORRICHTUNG
PRISE EN CHARGE DE LOCALISATION D'UN DISPOSITIF MOBILE AÉRIEN SANS FIL

(30) Priority: 04.08.2020 IN 202021033292
(43) Date of publication of application: 14.06.2023
(73) Proprietor: QUALCOMM INCORPORATED, San Diego, California 92121-1714 (US)
(72) Inventor: GUMMADI, Bapineedu Chowdary, San Diego, California 92121 (US); EDGE, Stephen William, San Diego, California 92121 (US); AGNIHOTRI, Hem, San Diego, California 92121 (US)
(74) Representative: Reddie & Grose LLP
(86) International application number: PCT/US2021/043009
(87) International publication number: WO 2022/031464

(56) References cited:
- WO-A1-2020/068310
- US-A1- 2010 178 934
- US-A1- 2014 266 911
- US-A1- 2019 179 346

## Description

### BACKGROUND

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service, a fourth-generation (4G) service (e.g., Long Term Evolution (LTE) or WiMax), a fifth-generation (5G) service, etc. There are presently many different types of wireless communication systems in use, including Cellular and Personal Communications Service (PCS) systems. Examples of known cellular systems include the cellular Analog Advanced Mobile Phone System (AMPS), and digital cellular systems based on Code Division Multiple Access (CDMA), Frequency Division Multiple Access (FDMA), Orthogonal Frequency Division Multiple Access (OFDMA), Time Division Multiple Access (TDMA), the Global System for Mobile access (GSM) variation of TDMA, etc.

A fifth generation (5G) mobile standard calls for higher data transfer speeds, greater numbers of connections, and better coverage, among other improvements. The 5G standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G standard. Furthermore, signaling efficiencies should be enhanced and latency should be substantially reduced compared to current standards.

In the case of an aerial mobile device (e.g., an unoccupied aerial vehicle (UAV) or "drone"), fast, accurate and reliable location of the mobile device may be useful or essential both to enable safe operation (e.g., to avoid flying near or over airports, government and military areas and tall buildings) and to enable better user control and tracking. However, locating an aerial mobile device may impose problems different to those for locating a terrestrial mobile device, such as greater wireless interference from base stations in Line Of Sight (LOS) to an aerial mobile device and a need to accurately measure altitude as well as horizontal location. Accordingly, different types of location solutions may be needed. In patent document US 2014/0266911 A1, systems and methods are described for estimating a position of receiver using ranging signals from different regions in a network of transmitters.

### SUMMARY

The invention is defined in the appended independent claims. Optional features are set out in the dependent claims.

### BRIEF DESCRIPTION OF THE DRAWINGS

FIG. 1 is a simplified diagram of an example wireless communications system.
FIG. 2 is a block diagram of components of an example user equipment shown in FIG. 1.
FIG. 3 is a block diagram of components of an example transmission/reception point.
FIG. 4 is a block diagram of components of an example server, various embodiments of which are shown in FIG. 1.
FIG. 5 is a block diagram of an example user equipment.
FIG. 6 is a simplified diagram of an environment including an aerial user equipment for which a location is to be determined.
FIG. 7 is a signaling and process flow of aerial UE position signaling and location determination.
FIG. 8 is a block flow diagram of a method of measuring positioning signals at a user equipment.
FIG. 9 is a block flow diagram of a method of providing instruction to a user equipment.
FIG. 10 is a block diagram of an example of a network entity.
FIG. 11 is a simplified diagram of an example database of topographic information.

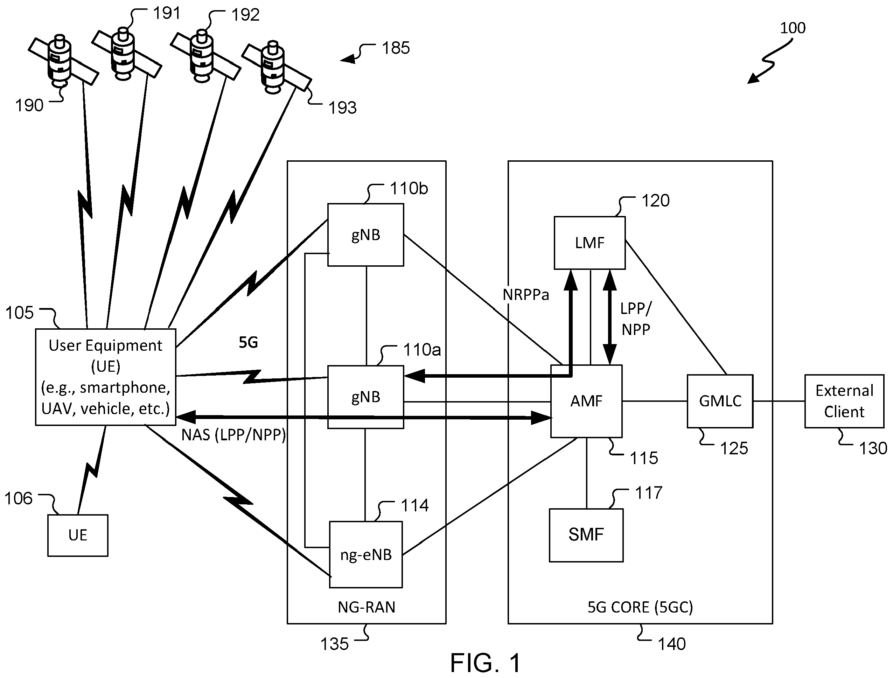

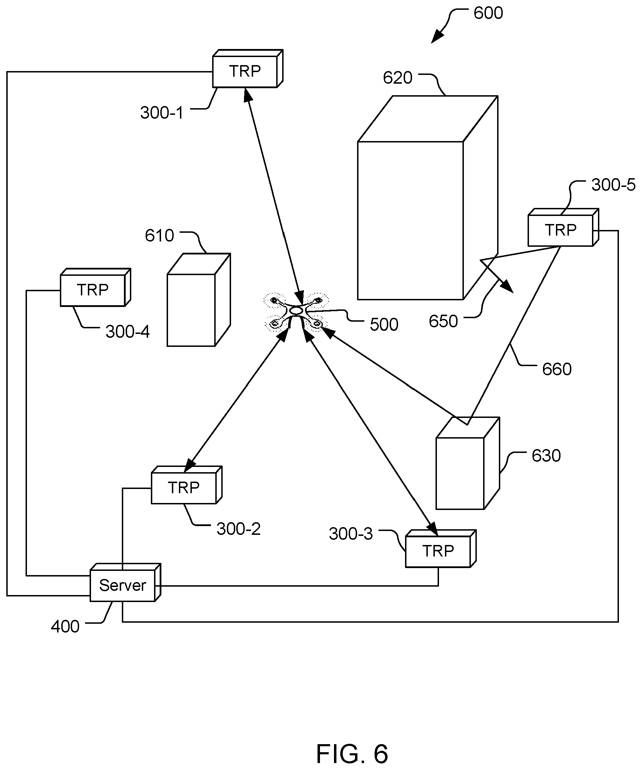

A common numeric label indicates like entities in FIGS. 1-11. A numeric label followed by a letter or by a hyphen and a number indicates one specific example of an entity. In such a case, a reference to the numeric label without the letter or the hyphen and the number indicates any or all specific examples of the entity. For example, two gNBs 110a and 110b are shown in FIG. 1. A reference to a gNB 110 then refers to either or both of gNB 110a and gNB 110b. Similarly, five TRPs (300-1, 300-2, 300-3, 300-4 and 300-5) are shown in FIG. 6. A reference to a TRP 300 then refers to any of or all of these TRPs.

### DETAILED DESCRIPTION

Techniques are discussed herein for enhancing positioning of an aerial mobile device, also referred to as aerial user equipment (UE). For example, an aerial UE or another entity such as a location server may determine which positioning signals the UE should measure. The (present and/or future) location, speed, trajectory, and/or flight path of the aerial UE may be used to help determine which positioning signal(s) the UE should measure. For example, the UE or other entity may determine to have the UE measure positioning signals only from sources that have line of sight with the UE. These are examples, and other examples may be implemented.

Items and/or techniques described herein may provide one or more of the following capabilities, as well as other capabilities not mentioned. Location accuracy may be improved, e.g., by limiting signal measurement to line-of-sight signals while avoiding non-line of sight (NLOS) (e.g., multipath) signals. Processing power to determine UE location may be reduced. Location of a UE may be determined in less time than with previous techniques. Other capabilities may be provided and not every implementation according to the disclosure must provide any, let alone all, of the capabilities discussed.

The description may refer to sequences of actions to be performed, for example, by elements of a computing device. Various actions described herein can be performed by specific circuits (e.g., an application specific integrated circuit (ASIC)), by program instructions being executed by one or more processors, or by a combination of both. Sequences of actions described herein may be embodied within a non-transitory computer-readable medium having stored thereon a corresponding set of computer instructions that upon execution would cause an associated processor to perform the functionality described herein. Thus, the various aspects described herein may be embodied in a number of different forms, all of which are within the scope of the disclosure, including claimed subject matter.

As used herein, the terms "user equipment" (UE) and "base station" are not specific to or otherwise limited to any particular Radio Access Technology (RAT), unless otherwise noted. In general, such UEs may be any wireless communication device (e.g., a mobile phone, router, tablet computer, laptop computer, consumer asset tracking device, Internet of Things (IoT) device, etc.) used by a user to communicate over a wireless communications network. A UE may be mobile or may (e.g., at certain times) be stationary, and may communicate with a Radio Access Network (RAN). A UE may correspond to a drone or UAV in many of the examples herein. As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," a "mobile device," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, WiFi networks (e.g., based on IEEE 802.11, etc.) and so on.

A base station may operate according to one of several RATs in communication with UEs depending on the network in which it is deployed, and may be alternatively referred to as an Access Point (AP), a Network Node, a NodeB, an evolved NodeB (eNB), a general Node B (gNodeB, gNB), etc. In addition, in some systems a base station may provide purely edge node signaling functions while in other systems it may provide additional control and/or network management functions.

UEs may be embodied by any of a number of types of devices including but not limited to printed circuit (PC) cards, compact flash devices, external or internal modems, wireless or wireline phones, smartphones, tablets, consumer asset tracking devices, asset tags, and so on. A communication link through which UEs can send signals to a RAN is called an uplink (UL) channel (e.g., a reverse traffic channel, a reverse control channel, an access channel, etc.). A communication link through which the RAN can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

As used herein, the term "cell" or "sector" may correspond to one of a plurality of cells of a base station, or to the base station itself, depending on the context. The term "cell" may refer to a logical communication entity used for communication with a base station (for example, over a carrier), and may be associated with an identifier for distinguishing neighboring cells (for example, a physical cell identifier (PCID), a virtual cell identifier (VCID)) operating via the same or a different carrier. In some examples, a carrier may support multiple cells, and different cells may be configured according to different protocol types (for example, machine-type communication (MTC), narrowband Internet-of-Things (NB-IoT), enhanced mobile broadband (eMBB), or others) that may provide access for different types of devices. In some examples, the term "cell" may refer to a portion of a geographic coverage area (for example, a sector) over which the logical entity operates.

Obtaining the locations of UEs that are accessing a wireless network may be useful for many applications including, for example, emergency calls, personal navigation, consumer asset tracking, locating a friend or family member, etc. Existing positioning methods include methods based on measuring radio signals transmitted from a variety of devices or entities including satellite vehicles (SVs) and terrestrial radio sources in a wireless network such as base stations and access points. It is expected that standardization for the 5G wireless networks will include support for various positioning methods, which may utilize reference signals transmitted by base stations in a manner similar to which LTE wireless networks currently utilize Positioning Reference Signals (PRS) and/or Cell-specific Reference Signals (CRS) for position determination.

Referring to **FIG. 1****,** an example of a communication system 100 includes a UE 105, a UE 106, a Radio Access Network (RAN) 135, here a Fifth Generation (5G) Next Generation (NG) RAN (NG-RAN), and a 5G Core Network (5GC) 140. The UE 105 and/or the UE 106 may be, e.g., an IoT device, a location tracker device, a cellular telephone, a vehicle (e.g., a car, a truck, a bus, a boat, etc.), an aerial vehicle, or other device. A 5G network may also be referred to as a New Radio (NR) network; NG-RAN 135 may be referred to as a 5G RAN or as an NR RAN; and 5GC 140 may be referred to as an NG Core network (NGC). The RAN 135 may be another type of RAN, e.g., a 3G RAN, a 4G Long Term Evolution (LTE) RAN, etc. The UE 106 may be configured and coupled similarly to the UE 105 to send and/or receive signals to/from similar other entities in the system 100, but such signaling is not indicated in FIG. 1 for the sake of simplicity of the figure. Similarly, the discussion focuses on the UE 105 for the sake of simplicity. The communication system 100 may utilize information from a constellation 185 of space vehicles (SVs) 190, 191, 192, 193 for a Satellite Positioning System (SPS) (e.g., a Global Navigation Satellite System (GNSS)) like the Global Positioning System (GPS), the Global Navigation Satellite System (GLONASS), Galileo, or Beidou or some other local or regional SPS such as the Indian Regional Navigational Satellite System (IRNSS), the European Geostationary Navigation Overlay Service (EGNOS), or the Wide Area Augmentation System (WAAS). Additional components of the communication system 100 are described below. The communication system 100 may include additional or alternative components.

As shown in FIG. 1, the NG-RAN 135 includes NR NodeBs (gNBs) 110a, 110b, and a next generation eNodeB (ng-eNB) 114, and the 5GC 140 includes an Access and Mobility Management Function (AMF) 115, a Session Management Function (SMF) 117, a Location Management Function (LMF) 120, and a Gateway Mobile Location Center (GMLC) 125. The gNBs 110a, 110b and the ng-eNB 114 are communicatively coupled to each other, are each configured to bi-directionally wirelessly communicate with the UE 105, and are each communicatively coupled to, and configured to bi-directionally communicate with, the AMF 115. The gNBs 110a, 110b, and the ng-eNB 114 may be referred to as base stations (BSs). The AMF 115, the SMF 117, the LMF 120, and the GMLC 125 are communicatively coupled to each other, and the GMLC is communicatively coupled to an external client 130. The SMF 117 may serve as an initial contact point of a Service Control Function (SCF) (not shown) to create, control, and delete media sessions. The BSs 110a, 110b, 114 may support a macro cell (e.g., may be a high-power cellular base station), or a small cell (e.g., may be a low-power cellular base station), or may be an access point (e.g., a short-range base station configured to communicate with short-range technology such as WiFi, WiFi-Direct (WiFi-D), Bluetooth^{®}, Bluetooth^{®}-low energy (BLE), Zigbee, etc. One or more of the BSs 110a, 110b, 114 may be configured to communicate with the UE 105 via multiple carriers. Each of the BSs 110a, 110b, 114 may provide communication coverage for a respective geographic region, e.g. a cell. Each cell may be partitioned into multiple sectors as a function of the base station antennas.

FIG. 1 provides a generalized illustration of various components, any or all of which may be utilized as appropriate, and each of which may be duplicated or omitted as necessary. Specifically, although only one UE 105 is illustrated, many UEs (e.g., hundreds, thousands, millions, etc.) may be utilized in the communication system 100. Similarly, the communication system 100 may include a larger (or smaller) number of SVs (i.e., more or fewer than the four SVs 190-193 shown), gNBs 110a, 110b, ng-eNBs 114, AMFs 115, external clients 130, and/or other components. The illustrated connections that connect the various components in the communication system 100 include data and signaling connections which may include additional (intermediary) components, direct or indirect physical and/or wireless connections, and/or additional networks. Furthermore, components may be rearranged, combined, separated, substituted, and/or omitted, depending on desired functionality.

While FIG. 1 illustrates a 5G-based network, similar network implementations and configurations may be used for other communication technologies, such as 3G, Long Term Evolution (LTE), etc. Implementations described herein (be they for 5G technology and/or for one or more other communication technologies and/or protocols) may be used to transmit (or broadcast) directional synchronization signals, receive and measure directional signals at UEs (e.g., the UE 105) and/or provide location assistance to the UE 105 (via the GMLC 125 or other location server) and/or compute a location for the UE 105 at a location-capable device such as the UE 105, the gNB 110a, 110b, or the LMF 120 based on measurement quantities received at the UE 105 for such directionally-transmitted signals. The gateway mobile location center (GMLC) 125, the location management function (LMF) 120, the access and mobility management function (AMF) 115, the SMF 117, the ng-eNB (eNodeB) 114 and the gNBs (gNodeBs) 110a, 110b are examples and may, in various embodiments, be replaced by or include various other location server functionality and/or base station functionality respectively.

The system 100 is capable of wireless communication in that components of the system 100 can communicate with one another (at least some times using wireless or wireline connections) directly or indirectly, e.g., via the BSs 110a, 110b, 114 and/or the network 140 (and/or one or more other devices not shown, such as one or more other base transceiver stations). For indirect communications, the communications may be altered during transmission from one entity to another, e.g., to alter header information of data packets, to change format, etc. The UE 105 may include multiple UEs and may be a mobile wireless communication device, but may communicate wirelessly and via wired connections. The UE 105 may be any of a variety of devices, e.g., a smartphone, a tablet computer, a vehicle-based device, a UAV, etc., but these are examples only as the UE 105 is not required to be any of these configurations, and other configurations of UEs may be used. Other UEs may include wearable devices (e.g., smart watches, smart jewelry, smart glasses or headsets, etc.). Still other UEs may be used, whether currently existing or developed in the future. Further, other wireless devices (whether mobile or not) may be implemented within the system 100 and may communicate with each other and/or with the UE 105, the BSs 110a, 110b, 114, the core network 140, and/or the external client 130. For example, such other devices may include internet of thing (IoT) devices, medical devices, home entertainment and/or automation devices, etc. The core network 140 may communicate with the external client 130 (e.g., a computer system), e.g., to allow the external client 130 to request and/or receive location information regarding the UE 105 (e.g., via the GMLC 125).

The UE 105 or other devices may be configured to communicate in various networks and/or for various purposes and/or using various technologies (e.g., 5G, Wi-Fi communication, multiple frequencies of Wi-Fi communication, satellite positioning, one or more types of communications (e.g., GSM (Global System for Mobiles), CDMA (Code Division Multiple Access), LTE (Long-Term Evolution), V2X (Vehicle-to-Everything, e.g., V2P (Vehicle-to-Pedestrian), V2I (Vehicle-to-Infrastructure), V2V (Vehicle-to-Vehicle), etc.), IEEE 802.11p, etc.). V2X communications may be cellular (Cellular-V2X (C-V2X)) and/or WiFi (e.g., DSRC (Dedicated Short-Range Connection)). The system 100 may support operation on multiple carriers (waveform signals of different frequencies). Multi-carrier transmitters can transmit modulated signals simultaneously on the multiple carriers. Each modulated signal may be a Code Division Multiple Access (CDMA) signal, a Time Division Multiple Access (TDMA) signal, an Orthogonal Frequency Division Multiple Access (OFDMA) signal, a Single-Carrier Frequency Division Multiple Access (SC-FDMA) signal, etc. Each modulated signal may be sent on a different carrier and may carry pilot, overhead information, data, etc. The UEs 105, 106 may communicate with each other through UE-to-UE sidelink (SL) communications by transmitting over one or more sidelink channels such as a physical sidelink synchronization channel (PSSCH), a physical sidelink broadcast channel (PSBCH), or a physical sidelink control channel (PSCCH).

The UE 105 may comprise and/or may be referred to as a device, a mobile device, a wireless device, a mobile terminal, a terminal, a mobile station (MS), a Secure User Plane Location (SUPL) Enabled Terminal (SET), or by some other name. Moreover, the UE 105 may correspond to a cellphone, smartphone, laptop, tablet, PDA, consumer asset tracking device, navigation device, Internet of Things (IoT) device, UAV, health monitors, security systems, smart city sensors, smart meters, wearable trackers, or some other portable or moveable device. Typically, though not necessarily, the UE 105 may support wireless communication using one or more Radio Access Technologies (RATs) such as Global System for Mobile communication (GSM), Code Division Multiple Access (CDMA), Wideband CDMA (WCDMA), LTE, High Rate Packet Data (HRPD), IEEE 802.11 WiFi (also referred to as Wi-Fi), Bluetooth^{®} (BT), Worldwide Interoperability for Microwave Access (WiMAX), 5G new radio (NR) (e.g., using the NG-RAN 135 and the 5GC 140), etc. The UE 105 may support wireless communication using a Wireless Local Area Network (WLAN) which may connect to other networks (e.g., the Internet) using a Digital Subscriber Line (DSL) or packet cable, for example. The use of one or more of these RATs may allow the UE 105 to communicate with the external client 130 (e.g., via elements of the 5GC 140 not shown in FIG. 1, or possibly via the GMLC 125) and/or allow the external client 130 to receive location information regarding the UE 105 (e.g., via the GMLC 125).

The UE 105 may include a single entity or may include multiple entities such as in a personal area network where a user may employ audio, video and/or data I/O (input/output) devices and/or body sensors and a separate wireline or wireless modem. An estimate of a location of the UE 105 may be referred to as a location, location estimate, location fix, fix, position, position estimate, or position fix, and may be geographic, thus providing location coordinates for the UE 105 (e.g., latitude and longitude) which may or may not include an altitude component (e.g., height above sea level, height above or depth below ground level, floor level, or basement level). Alternatively, a location of the UE 105 may be expressed as a civic location (e.g., as a postal address or the designation of some point or small area in a building such as a particular room or floor). A location of the UE 105 may be expressed as an area or volume (defined either geographically or in civic form) within which the UE 105 is expected to be located with some probability or confidence level (e.g., 67%, 95%, etc.). A location of the UE 105 may be expressed as a relative location comprising, for example, a distance and direction from a known location. The relative location may be expressed as relative coordinates (e.g., X, Y (and Z) coordinates) defined relative to some origin at a known location which may be defined, e.g., geographically, in civic terms, or by reference to a point, area, or volume, e.g., indicated on a map, floor plan, or building plan. In the description contained herein, the use of the term location may comprise any of these variants unless indicated otherwise. When computing the location of a UE, it is common to solve for local x, y, and possibly z coordinates and then, if desired, convert the local coordinates into absolute coordinates (e.g., for latitude, longitude, and altitude above or below mean sea level).

The UE 105 may be configured to communicate with other entities using one or more of a variety of technologies. The UE 105 may be configured to connect indirectly to one or more communication networks via one or more device-to-device (D2D) peer-to-peer (P2P) links. The D2D P2P links may be supported with any appropriate D2D radio access technology (RAT), such as LTE Direct (LTE-D), WiFi Direct (WiFi-D), Bluetooth^{®}, and so on.

Base stations (BSs) in the NG-RAN 135 shown in FIG. 1 include NR NodeBs, referred to as the gNBs 110a and 110b. Pairs of the gNBs 110a, 110b in the NG-RAN 135 may be connected to one another via one or more other gNBs. Access to the 5G network is provided to the UE 105 via wireless communication between the UE 105 and one or more of the gNBs 110a, 110b, which may provide wireless communications access to the 5GC 140 on behalf of the UE 105 using 5G. In FIG. 1, the serving gNB for the UE 105 is assumed to be the gNB 110a, although another gNB (e.g., the gNB 110b) may act as a serving gNB if the UE 105 moves to another location or may act as a secondary gNB to provide additional throughput and bandwidth to the UE 105.

Base stations (BSs) in the NG-RAN 135 shown in FIG. 1 may include the ng-eNB 114, also referred to as a next generation evolved Node B. The ng-eNB 114 may be connected to one or more of the gNBs 110a, 110b in the NG-RAN 135, possibly via one or more other gNBs and/or one or more other ng-eNBs. The ng-eNB 114 may provide LTE wireless access and/or evolved LTE (eLTE) wireless access to the UE 105. One or more of the gNBs 110a, 110b and/or the ng-eNB 114 may be configured to function as positioning-only beacons which may transmit signals to assist with determining the position of the UE 105 but may not receive signals from the UE 105 or from other UEs.

The BSs 110a, 110b, 114 may each comprise one or more Transmission-Reception Points (TRPs). A TRP may be part of a base station (e.g. a gNB 110 or ng-eNB 114) that supports transmission and/or reception of wireless signals within a cell or cell-sector. For example, each sector within a cell of a BS may be supported by a TRP, although multiple TRPs may share one or more components (e.g., share a processor but have separate antennas). The system 100 may include only macro TRPs or the system 100 may have TRPs of different types, e.g., macro, pico, and/or femto TRPs, etc. A macro TRP may have a relatively large geographic coverage area (e.g., several kilometers in radius) and may allow unrestricted access by terminals with service subscription. A pico TRP may have a relatively small geographic coverage area (e.g., a pico cell) and may allow unrestricted access by terminals with service subscription. A femto or home TRP may have a relatively small geographic coverage area (e.g., a femto cell) and may allow restricted access by terminals having association with the femto cell (e.g., terminals for users in a home).

As noted, while FIG. 1 depicts nodes configured to communicate according to 5G communication protocols, nodes configured to communicate according to other communication protocols, such as, for example, an LTE protocol or IEEE 802.11x protocol, may be used. For example, in an Evolved Packet System (EPS) providing LTE wireless access to the UE 105, a RAN may comprise an Evolved Universal Mobile Telecommunications System (UMTS) Terrestrial Radio Access Network (E-UTRAN) which may comprise base stations comprising evolved Node Bs (eNBs). A core network for an EPS may comprise an Evolved Packet Core (EPC). An EPS may comprise an E-UTRAN plus EPC, where the E-UTRAN corresponds to the NG-RAN 135 and the EPC corresponds to the 5GC 140 in FIG. 1.

The gNBs 110a, 110b and the ng-eNB 114 may communicate with the AMF 115, which, for positioning functionality, communicates with the LMF 120. The AMF 115 may support mobility of the UE 105, including cell change and handover and may participate in supporting a signaling connection to the UE 105 and possibly data and voice bearers for the UE 105. The LMF 120 may communicate with the UE 105 via the AMF 115 and a gNB 110 or ng-eNB 114, e.g., through wireless communications, or directly with the BSs 110a, 110b, 114. The LMF 120 may support positioning of the UE 105 when the UE 105 accesses the NG-RAN 135 and may support position procedures / methods such as Assisted GNSS (A-GNSS), Observed Time Difference of Arrival (OTDOA), Downlink Time Difference of Arrival (DL-TDOA), Uplink Time Difference of Arrival (UL-TDOA), multi-cell round-trip signal propagation time (referred to as multi-cell RTT or multi-RTT), Real Time Kinematic (RTK), Precise Point Positioning (PPP), Differential GNSS (DGNSS), Enhanced Cell ID (E-CID), angle of arrival (AOA), angle of departure (AOD), and/or other position methods. The LMF 120 may process location services requests for the UE 105, e.g., received from the AMF 115. The LMF 120 may be connected to the AMF 115 and possibly to the GMLC 125. A node / system that implements the LMF 120 may additionally or alternatively implement other types of location-support modules, such as an Enhanced Serving Mobile Location Center (E-SMLC) or a Secure User Plane Location (SUPL) Location Platform (SLP) that supports the SUPL location solution defined by the Open Mobile Alliance (OMA). At least part of the positioning functionality (including derivation of the UE 105's location) may be performed at the UE 105 (e.g., using signal measurements obtained by the UE 105 for signals transmitted by wireless nodes such as the gNBs 110a, 110b and/or the ng-eNB 114, and/or assistance data provided to the UE 105, e.g., by the LMF 120). The AMF 115 may serve as a control node that processes signaling between the UE 105 and the core network 140, and provides QoS (Quality of Service) flow and session management. The AMF 115 may support mobility of the UE 105 including cell change and handover and may participate in supporting signaling connection to the UE 105.

The GMLC 125 may support a location request for the UE 105 received from the external client 130 and may forward such a location request to the AMF 115 for forwarding by the AMF 115 to the LMF 120. A location response from the LMF 120 (e.g., containing a location estimate for the UE 105) may be returned to the GMLC 125 either directly or via the AMF 115 and the GMLC 125 may then return the location response (e.g., containing the location estimate) to the external client 130.

As further illustrated in FIG. 1, the LMF 120 may communicate with the gNBs 110a, 110b and/or the ng-eNB 114 using a New Radio Position Protocol A (NRPPa), which may be defined in 3GPP Technical Specification (TS) 38.455. NRPPa messages may be transferred between the gNB 110a (or the gNB 110b) and the LMF 120, and/or between the ng-eNB 114 and the LMF 120, via the AMF 115. As further illustrated in FIG. 1, the LMF 120 and the UE 105 may communicate using an LTE Positioning Protocol (LPP), which may be defined in 3GPP TS 37.355. Here, LPP messages may be transferred between the UE 105 and the LMF 120 via the AMF 115 and the serving gNB 110a, 110b or the serving ng-eNB 114 for the UE 105. For example, LPP messages may be transferred between the LMF 120 and the AMF 115 using the Hypertext Transfer Protocol (HTTP) and may be transferred between the AMF 115 and the UE 105 using a 5G Non-Access Stratum (NAS) protocol. The LPP protocol may be used to support positioning of the UE 105 using UE-assisted and/or UE-based position methods such as A-GNSS, RTK, OTDOA, multi-RTT, and/or E-CID. The NRPPa protocol may be used to support positioning of the UE 105 using network-based position methods such as E-CID (e.g., when used with measurements obtained by the gNB 110a, 110b or the ng-eNB 114) and/or may be used by the LMF 120 to obtain location related information from the gNBs 110a, 110b and/or the ng-eNB 114, such as parameters defining directional and/or omnidirectional Synchronization Signal (SS) and/or Positioning Reference Signal (PRS) transmissions from the gNBs 110a, 110b, and/or the ng-eNB 114. An NG-RAN 135 location function similar to the LMF 120, which may be referred to as a Location Management Component (LMC) and not shown in FIG. 1, may be co-located or integrated with a gNB 110 or a TRP, or may be disposed remotely from the gNB 110 and/or the TRP and configured to communicate directly or indirectly with the gNB 110 and/or the TRP.

With a UE-assisted position method, the UE 105 may obtain location measurements and send the measurements to a location server (e.g., the LMF 120) for computation of a location estimate for the UE 105. For example, the location measurements may include one or more of a Received Signal Strength Indication (RSSI), Round Trip signal propagation Time (RTT), Reference Signal Time Difference (RSTD), Reference Signal Received Power (RSRP), Receive Time-Transmission Time difference (Rx-Tx), and/or Reference Signal Received Quality (RSRQ) for the gNBs 110a, 110b, the ng-eNB 114, and/or a WLAN AP. The location measurements may also or instead include measurements of GNSS pseudorange, code phase, and/or carrier phase for the SVs 190-193.

With a UE-based position method, the UE 105 may obtain location measurements (e.g., which may be the same as or similar to location measurements for a UE-assisted position method) and may compute a location of the UE 105 (e.g., with the help of assistance data received from a location server such as the LMF 120 or broadcast by the gNBs 110a, 110b, the ng-eNB 114, or other base stations or APs).

With a network-based position method, one or more base stations (e.g., the gNBs 110a, 110b, and/or the ng-eNB 114) or APs may obtain location measurements (e.g., measurements of RSSI, RTT, RSRP, RSRQ, AOA, Rx-Tx or Time Of Arrival (ToA) for signals transmitted by the UE 105) and/or may receive measurements obtained by the UE 105. The one or more base stations or APs may send the measurements to a location server (e.g., the LMF 120) for computation of a location estimate for the UE 105.

Information provided by the gNBs 110a, 110b, and/or the ng-eNB 114 to the LMF 120 using NRPPa may include timing and configuration information for directional SS and/or PRS transmissions and location coordinates. The LMF 120 may provide some or all of this information to the UE 105 as assistance data in an LPP message via the NG-RAN 135 and the 5GC 140.

An LPP message sent from the LMF 120 to the UE 105 may instruct the UE 105 to do any of a variety of things depending on desired functionality. For example, the LPP message could contain an instruction for the UE 105 to obtain measurements for GNSS (or A-GNSS), WLAN, E-CID, multi-RTT, AOD and/or DL-TDOA (or some other position method). In the case of E-CID, the LPP message may instruct the UE 105 to obtain one or more measurement quantities (e.g., beam ID, beam width, mean angle, RSRP, RSRQ measurements) of directional signals transmitted within particular cells supported by one or more of the gNBs 110a, 110b, and/or the ng-eNB 114 (or supported by some other type of base station such as an eNB or WiFi AP). The UE 105 may send the measurement quantities back to the LMF 120 in an LPP message (e.g., inside a 5G NAS message) via the serving gNB 110a (or the serving ng-eNB 114) and the AMF 115.

As noted, while the communication system 100 is described in relation to 5G technology, the communication system 100 may be implemented to support other communication technologies, such as GSM, WCDMA, LTE, etc., that are used for supporting and interacting with mobile devices such as the UE 105 (e.g., to implement voice, data, positioning, and other functionalities). In some such embodiments, the 5GC 140 may be configured to control different air interfaces. For example, the 5GC 140 may be connected to a WLAN using a Non-3GPP InterWorking Function (N31WF, not shown FIG. 1) in the 5GC 150. For example, the WLAN may support IEEE 802.11 WiFi access for the UE 105 and may comprise one or more WiFi APs. Here, the N3IWF may connect to the WLAN and to other elements in the 5GC 140 such as the AMF 115. In some embodiments, both the NG-RAN 135 and the 5GC 140 may be replaced by one or more other RANs and one or more other core networks. For example, in an EPS, the NG-RAN 135 may be replaced by an E-UTRAN containing eNBs and the 5GC 140 may be replaced by an EPC containing a Mobility Management Entity (MME) in place of the AMF 115, an E-SMLC in place of the LMF 120, and a GMLC that may be similar to the GMLC 125. In such an EPS, the E-SMLC may use an LTE Positioning Protocol A (LPPa) as defined in 3GPP TS 36.455 in place of NRPPa to send and receive location information to and from the eNBs in the E-UTRAN and may use LPP to support positioning of the UE 105. In these other embodiments, positioning of the UE 105 using directional PRSs may be supported in an analogous manner to that described herein for a 5G network with the difference that functions and procedures described herein for the gNBs 110a, 110b, the ng-eNB 114, the AMF 115, and the LMF 120 may, in some cases, apply instead to other network elements such eNBs, WiFi APs, an MME, and an E-SMLC.

As noted, in some embodiments, positioning functionality may be implemented, at least in part, using the directional SS beams, sent by base stations (such as the gNBs 110a, 110b, and/or the ng-eNB 114) that are within range of the UE whose position is to be determined (e.g., the UE 105 of FIG. 1). The UE 105 may, in some instances, use the directional SS beams from a plurality of base stations (such as the gNBs 110a, 110b, the ng-eNB 114, etc.) to compute the position of the UE 105.

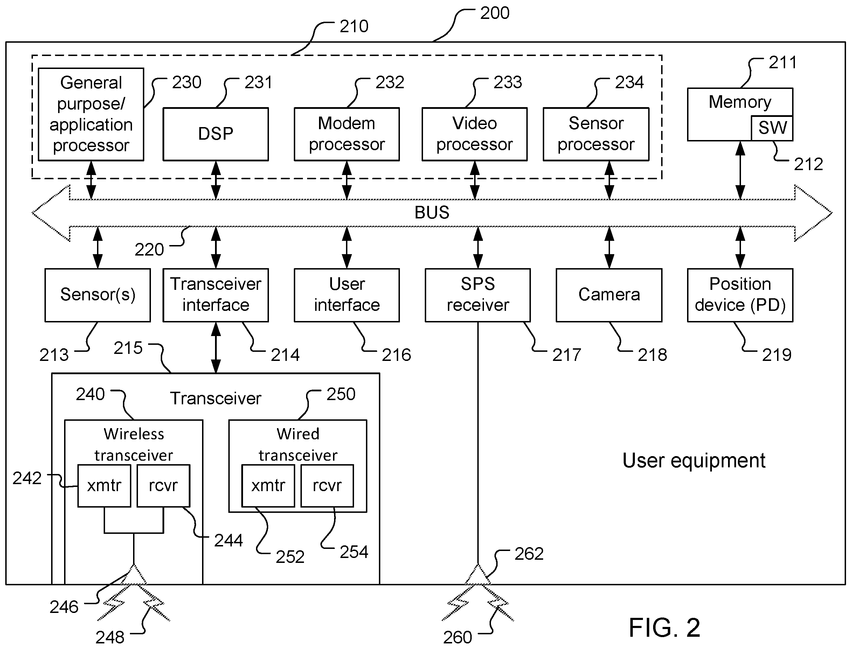

Referring also to **FIG. 2****,** a UE 200 is an example of one of the UEs 105, 106 and comprises a computing platform including a processor 210, memory 211 including software (SW) 212, one or more sensors 213, a transceiver interface 214 for a transceiver 215 (that includes a wireless transceiver 240 and a wired transceiver 250), a user interface 216, a Satellite Positioning System (SPS) receiver 217, a camera 218, and a position device (PD) 219. The processor 210, the memory 211, the sensor(s) 213, the transceiver interface 214, the user interface 216, the SPS receiver 217, the camera 218, and the position device 219 may be communicatively coupled to each other by a bus 220 (which may be configured, e.g., for optical and/or electrical communication). One or more of the shown apparatus (e.g., the camera 218, the position device 219, and/or one or more of the sensor(s) 213, etc.) may be omitted from the UE 200. The processor 210 may include one or more intelligent hardware devices, e.g., a central processing unit (CPU), a microcontroller, an application specific integrated circuit (ASIC), etc. The processor 210 may comprise multiple processors including a general-purpose/ application processor 230, a Digital Signal Processor (DSP) 231, a modem processor 232, a video processor 233, and/or a sensor processor 234. One or more of the processors 230-234 may comprise multiple devices (e.g., multiple processors). For example, the sensor processor 234 may comprise, e.g., processors for radar, ultrasound, and/or lidar, etc. The modem processor 232 may support dual SIM/dual connectivity (or even more SIMs). For example, a SIM (Subscriber Identity Module or Subscriber Identification Module) may be used by an Original Equipment Manufacturer (OEM), and another SIM may be used by an end user of the UE 200 for connectivity. The memory 211 is a non-transitory storage medium that may include random access memory (RAM), flash memory, disc memory, and/or read-only memory (ROM), etc. The memory 211 stores the software 212 which may be processor-readable, processor-executable software code containing instructions that are configured to, when executed, cause the processor 210 to perform various functions described herein. Alternatively, the software 212 may not be directly executable by the processor 210 but may be configured to cause the processor 210, e.g., when compiled and executed, to perform the functions. The description may refer only to the processor 210 performing a function, but this includes other implementations such as where the processor 210 executes software and/or firmware. The description may refer to the processor 210 performing a function as shorthand for one or more of the processors 230-234 performing the function. The description may refer to the UE 200 performing a function as shorthand for one or more appropriate components of the UE 200 performing the function. The processor 210 may include a memory with stored instructions in addition to and/or instead of the memory 211. Functionality of the processor 210 is discussed more fully below.

The configuration of the UE 200 shown in FIG. 2 is an example and not limiting of the disclosure, including the claims, and other configurations may be used. For example, an example configuration of the UE includes one or more of the processors 230-234 of the processor 210, the memory 211, and the wireless transceiver 240. Other example configurations include one or more of the processors 230-234 of the processor 210, the memory 211, the wireless transceiver 240, and one or more of the sensor(s) 213, the user interface 216, the SPS receiver 217, the camera 218, the PD 219, and/or the wired transceiver 250.

The UE 200 may comprise the modem processor 232 that may be capable of performing baseband processing of signals received and down-converted by the transceiver 215 and/or the SPS receiver 217. The modem processor 232 may perform baseband processing of signals to be upconverted for transmission by the transceiver 215. Also or alternatively, baseband processing may be performed by the processor 230 and/or the DSP 231. Other configurations, however, may be used to perform baseband processing.

The UE 200 may include the sensor(s) 213 that may include, for example, one or more of various types of sensors such as one or more inertial sensors, one or more magnetometers, one or more environment sensors, one or more optical sensors, one or more weight sensors, and/or one or more radio frequency (RF) sensors, etc. An inertial measurement unit (IMU) may comprise, for example, one or more accelerometers (e.g., collectively responding to acceleration of the UE 200 in three dimensions) and/or one or more gyroscopes (e.g., three-dimensional gyroscope(s)). The sensor(s) 213 may include one or more magnetometers (e.g., three-dimensional magnetometer(s)) to determine orientation (e.g., relative to magnetic north and/or true north) that may be used for any of a variety of purposes, e.g., to support one or more compass applications. The environment sensor(s) may comprise, for example, one or more temperature sensors, one or more barometric pressure sensors, one or more ambient light sensors, one or more camera imagers, and/or one or more microphones, etc. The sensor(s) 213 may generate analog and/or digital signals indications of which may be stored in the memory 211 and processed by the DSP 231 and/or the processor 230 in support of one or more applications such as, for example, applications directed to positioning and/or navigation operations.

The sensor(s) 213 may be used in relative location measurements, relative location determination, motion determination, etc. Information detected by the sensor(s) 213 may be used for motion detection, relative displacement, dead reckoning, sensor-based location determination, and/or sensor-assisted location determination. The sensor(s) 213 may be useful to determine whether the UE 200 is fixed (stationary) or mobile and/or whether to report certain useful information to the LMF 120 regarding the mobility of the UE 200. For example, based on the information obtained/measured by the sensor(s) 213, the UE 200 may notify/report to the LMF 120 that the UE 200 has detected movements or that the UE 200 has moved, and report the relative displacement/distance (e.g., via dead reckoning, or sensor-based location determination, or sensor-assisted location determination enabled by the sensor(s) 213). In another example, for relative positioning information, the sensors/IMU can be used to determine the angle and/or orientation of the other device with respect to the UE 200, etc.

The IMU may be configured to provide measurements about a direction of motion and/or a speed of motion of the UE 200, which may be used in relative location determination. For example, one or more accelerometers and/or one or more gyroscopes of the IMU may detect, respectively, a linear acceleration and a speed of rotation of the UE 200. The linear acceleration and speed of rotation measurements of the UE 200 may be integrated over time to determine an instantaneous direction of motion as well as a displacement of the UE 200. The instantaneous direction of motion and the displacement may be integrated to track a location of the UE 200. For example, a reference location of the UE 200 may be determined, e.g., using the SPS receiver 217 (and/or by some other means) for a moment in time and measurements from the accelerometer(s) and gyroscope(s) taken after this moment in time may be used in dead reckoning to determine present location of the UE 200 based on movement (direction and distance) of the UE 200 relative to the reference location.

The magnetometer(s) may determine magnetic field strengths in different directions which may be used to determine orientation of the UE 200. For example, the orientation may be used to provide a digital compass for the UE 200. The magnetometer(s) may include a two-dimensional magnetometer configured to detect and provide indications of magnetic field strength in two orthogonal dimensions. The magnetometer(s) may include a three-dimensional magnetometer configured to detect and provide indications of magnetic field strength in three orthogonal dimensions. The magnetometer(s) may provide means for sensing a magnetic field and providing indications of the magnetic field, e.g., to the processor 210.

The transceiver 215 may include a wireless transceiver 240 and a wired transceiver 250 configured to communicate with other devices through wireless connections and wired connections, respectively. For example, the wireless transceiver 240 may include a wireless transmitter 242 and a wireless receiver 244 coupled to one or more antennas 246 for transmitting (e.g., on one or more uplink channels and/or one or more sidelink channels) and/or receiving (e.g., on one or more downlink channels and/or one or more sidelink channels) wireless signals 248 and transducing signals from the wireless signals 248 to wired (e.g., electrical and/or optical) signals and from wired (e.g., electrical and/or optical) signals to the wireless signals 248. Thus, the wireless transmitter 242 may include multiple transmitters that may be discrete components or combined/integrated components, and/or the wireless receiver 244 may include multiple receivers that may be discrete components or combined/integrated components. The wireless transceiver 240 may be configured to communicate signals (e.g., with TRPs and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), IEEE 802.11 (including IEEE 802.11p), WiFi, WiFi Direct (WiFi-D), Bluetooth^{®}, Zigbee etc. New Radio may use mm-wave frequencies and/or sub-6GHz frequencies. The wired transceiver 250 may include a wired transmitter 252 and a wired receiver 254 configured for wired communication, e.g., a network interface that may be utilized to communicate with the network 135 to send communications to, and receive communications from, the network 135. The wired transmitter 252 may include multiple transmitters that may be discrete components or combined/integrated components, and/or the wired receiver 254 may include multiple receivers that may be discrete components or combined/integrated components. The wired transceiver 250 may be configured, e.g., for optical communication and/or electrical communication. The transceiver 215 may be communicatively coupled to the transceiver interface 214, e.g., by optical and/or electrical connection. The transceiver interface 214 may be at least partially integrated with the transceiver 215.

The user interface 216 may comprise one or more of several devices such as, for example, a speaker, microphone, display device, vibration device, keyboard, touch screen, etc. The user interface 216 may include more than one of any of these devices. The user interface 216 may be configured to enable a user to interact with one or more applications hosted by the UE 200. For example, the user interface 216 may store indications of analog and/or digital signals in the memory 211 to be processed by DSP 231 and/or the general-purpose processor 230 in response to action from a user. Similarly, applications hosted on the UE 200 may store indications of analog and/or digital signals in the memory 211 to present an output signal to a user. The user interface 216 may include an audio input/output (I/O) device comprising, for example, a speaker, a microphone, digital-to-analog circuitry, analog-to-digital circuitry, an amplifier and/or gain control circuitry (including more than one of any of these devices). Other configurations of an audio I/O device may be used. Also or alternatively, the user interface 216 may comprise one or more touch sensors responsive to touching and/or pressure, e.g., on a keyboard and/or touch screen of the user interface 216.

The SPS receiver 217 (e.g., a Global Positioning System (GPS) receiver) may be capable of receiving and acquiring SPS signals 260 via an SPS antenna 262. The antenna 262 is configured to transduce the wireless SPS signals 260 to wired signals, e.g., electrical or optical signals, and may be integrated with the antenna 246. The SPS receiver 217 may be configured to process, in whole or in part, the acquired SPS signals 260 for estimating a location of the UE 200. For example, the SPS receiver 217 may be configured to determine location of the UE 200 by trilateration using the SPS signals 260. The general-purpose processor 230, the memory 211, the DSP 231 and/or one or more specialized processors (not shown) may be utilized to process acquired SPS signals, in whole or in part, and/or to calculate an estimated location of the UE 200, in conjunction with the SPS receiver 217. The memory 211 may store indications (e.g., measurements) of the SPS signals 260 and/or other signals (e.g., signals acquired from the wireless transceiver 240) for use in performing positioning operations. The general-purpose processor 230, the DSP 231, and/or one or more specialized processors, and/or the memory 211 may provide or support a location engine for use in processing measurements to estimate a location of the UE 200.

The UE 200 may include the camera 218 for capturing still or moving imagery. The camera 218 may comprise, for example, an imaging sensor (e.g., a charge coupled device or a CMOS imager), a lens, analog-to-digital circuitry, frame buffers, etc. Additional processing, conditioning, encoding, and/or compression of signals representing captured images may be performed by the general-purpose processor 230 and/or the DSP 231. Also or alternatively, the video processor 233 may perform conditioning, encoding, compression, and/or manipulation of signals representing captured images. The video processor 233 may decode/decompress stored image data for presentation on a display device (not shown), e.g., of the user interface 216.

The position device (PD) 219 may be configured to determine a position of the UE 200, motion of the UE 200, and/or relative position of the UE 200, and/or time. For example, the PD 219 may communicate with, and/or include some or all of, the SPS receiver 217. The PD 219 may work in conjunction with the processor 210 and the memory 211 as appropriate to perform at least a portion of one or more positioning methods, although the description herein may refer only to the PD 219 being configured to perform, or performing, in accordance with the positioning method(s). The PD 219 may also or alternatively be configured to determine location of the UE 200 using terrestrial-based signals (e.g., at least some of the signals 248) for trilateration, for assistance with obtaining and using the SPS signals 260, or both. The PD 219 may be configured to use one or more other techniques (e.g., relying on the UE's self-reported location (e.g., part of the UE's position beacon)) for determining the location of the UE 200, and may use a combination of techniques (e.g., SPS and terrestrial positioning signals) to determine the location of the UE 200. The PD 219 may include one or more of the sensors 213 (e.g., gyroscope(s), accelerometer(s), magnetometer(s), etc.) that may sense orientation and/or motion of the UE 200 and provide indications thereof that the processor 210 (e.g., the processor 230 and/or the DSP 231) may be configured to use to determine motion (e.g., a velocity vector and/or an acceleration vector) of the UE 200. The PD 219 may be configured to provide indications of uncertainty and/or error in the determined position and/or motion. Functionality of the PD 219 may be provided in a variety of manners and/or configurations, e.g., by the general purpose/application processor 230, the transceiver 215, the SPS receiver 217, and/or another component of the UE 200, and may be provided by hardware, software, firmware, or various combinations thereof.

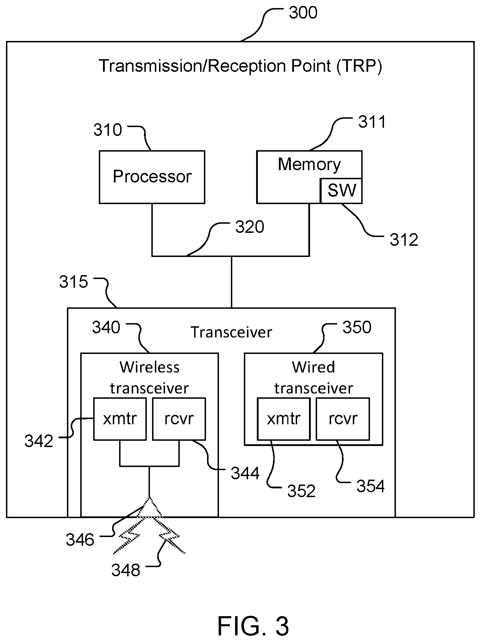

Referring also to FIG. 3, an example of a TRP 300 of the BSs 110a, 110b, 114 comprises a computing platform including a processor 310, memory 311 including software (SW) 312, and a transceiver 315. TRP 300 in FIG. 3 may correspond to a gNB 110 or ng-eNB 114 or to a portion of a gNB 110 or ng-eNB 114 which supports signal reception and/or signal transmission in a single cell or single cell sector. The processor 310, the memory 311, and the transceiver 315 may be communicatively coupled to each other by a bus 320 (which may be configured, e.g., for optical and/or electrical communication). One or more of the shown apparatus (e.g., a wireless interface) may be omitted from the TRP 300. The processor 310 may include one or more intelligent hardware devices, e.g., a central processing unit (CPU), a microcontroller, an application specific integrated circuit (ASIC), etc. The processor 310 may comprise multiple processors (e.g., including a general-purpose/ application processor, a DSP, a modem processor, a video processor, and/or a sensor processor as shown in FIG. 2). The memory 311 is a non-transitory storage medium that may include random access memory (RAM)), flash memory, disc memory, and/or read-only memory (ROM), etc. The memory 311 stores the software 312 which may be processor-readable, processor-executable software code containing instructions that are configured to, when executed, cause the processor 310 to perform various functions described herein. Alternatively, the software 312 may not be directly executable by the processor 310 but may be configured to cause the processor 310, e.g., when compiled and executed, to perform the functions.

The description may refer only to the processor 310 performing a function, but this includes other implementations such as where the processor 310 executes software and/or firmware. The description may refer to the processor 310 performing a function as shorthand for one or more of the processors contained in the processor 310 performing the function. The description may refer to the TRP 300 performing a function as shorthand for one or more appropriate components (e.g., the processor 310 and the memory 311) of the TRP 300 (and thus of one of the BSs 110a, 110b, 114) performing the function. The processor 310 may include a memory with stored instructions in addition to and/or instead of the memory 311. Functionality of the processor 310 is discussed more fully below.

The transceiver 315 may include a wireless transceiver 340 and/or a wired transceiver 350 configured to communicate with other devices through wireless connections and wired connections, respectively. For example, the wireless transceiver 340 may include a wireless transmitter 342 and a wireless receiver 344 coupled to one or more antennas 346 for transmitting (e.g., on one or more uplink channels and/or one or more downlink channels) and/or receiving (e.g., on one or more downlink channels and/or one or more uplink channels) wireless signals 348 and transducing signals from the wireless signals 348 to wired (e.g., electrical and/or optical) signals and from wired (e.g., electrical and/or optical) signals to the wireless signals 348. Thus, the wireless transmitter 342 may include multiple transmitters that may be discrete components or combined/integrated components, and/or the wireless receiver 344 may include multiple receivers that may be discrete components or combined/integrated components. The wireless transceiver 340 may be configured to communicate signals (e.g., with the UE 200, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), IEEE 802.11 (including IEEE 802.11p), WiFi, WiFi Direct (WiFi-D), Bluetooth^{®}, Zigbee etc. The wired transceiver 350 may include a wired transmitter 352 and a wired receiver 354 configured for wired communication, e.g., a network interface that may be utilized to communicate with the network 135 to send communications to, and receive communications from, the LMF 120, for example, and/or one or more other network entities. The wired transmitter 352 may include multiple transmitters that may be discrete components or combined/integrated components, and/or the wired receiver 354 may include multiple receivers that may be discrete components or combined/integrated components. The wired transceiver 350 may be configured, e.g., for optical communication and/or electrical communication.

The configuration of the TRP 300 shown in FIG. 3 is an example and not limiting of the disclosure, including the claims, and other configurations may be used. For example, the description herein discusses that the TRP 300 is configured to perform or performs several functions, but one or more of these functions may be performed by the LMF 120 and/or the UE 200 (i.e., the LMF 120 and/or the UE 200 may be configured to perform one or more of these functions).

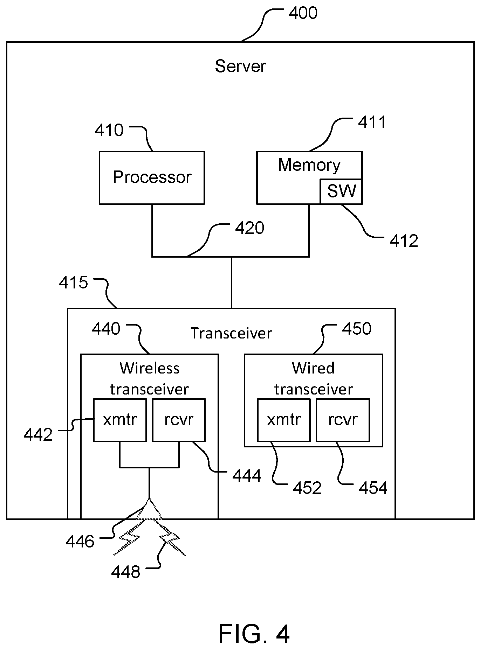

Referring also to **FIG. 4****,** a server 400, which is an example of the LMF 120 or another location server such as an E-SMLC or SLP, comprises a computing platform including a processor 410, memory 411 including software (SW) 412, and a transceiver 415. The processor 410, the memory 411, and the transceiver 415 may be communicatively coupled to each other by a bus 420 (which may be configured, e.g., for optical and/or electrical communication). One or more of the shown apparatus (e.g., a wireless interface) may be omitted from the server 400. The processor 410 may include one or more intelligent hardware devices, e.g., a central processing unit (CPU), a microcontroller, an application specific integrated circuit (ASIC), etc. The processor 410 may comprise multiple processors (e.g., including a general-purpose/ application processor, a DSP, a modem processor, a video processor, and/or a sensor processor as shown in FIG. 2). The memory 411 is a non-transitory storage medium that may include random access memory (RAM)), flash memory, disc memory, and/or read-only memory (ROM), etc. The memory 411 stores the software 412 which may be processor-readable, processor-executable software code containing instructions that are configured to, when executed, cause the processor 410 to perform various functions described herein. Alternatively, the software 412 may not be directly executable by the processor 410 but may be configured to cause the processor 410, e.g., when compiled and executed, to perform the functions. The description may refer only to the processor 410 performing a function, but this includes other implementations such as where the processor 410 executes software and/or firmware. The description may refer to the processor 410 performing a function as shorthand for one or more of the processors contained in the processor 410 performing the function. The description may refer to the server 400 performing a function as shorthand for one or more appropriate components of the server 400 performing the function. The processor 410 may include a memory with stored instructions in addition to and/or instead of the memory 411. Functionality of the processor 410 is discussed more fully below.

The transceiver 415 may include a wireless transceiver 440 and/or a wired transceiver 450 configured to communicate with other devices through wireless connections and wired connections, respectively. For example, the wireless transceiver 440 may include a wireless transmitter 442 and a wireless receiver 444 coupled to one or more antennas 446 for transmitting (e.g., on one or more downlink channels) and/or receiving (e.g., on one or more uplink channels) wireless signals 448 and transducing signals from the wireless signals 448 to wired (e.g., electrical and/or optical) signals and from wired (e.g., electrical and/or optical) signals to the wireless signals 448. Thus, the wireless transmitter 442 may include multiple transmitters that may be discrete components or combined/integrated components, and/or the wireless receiver 444 may include multiple receivers that may be discrete components or combined/integrated components. The wireless transceiver 440 may be configured to communicate signals (e.g., with the UE 200, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), IEEE 802.11 (including IEEE 802.11p), WiFi, WiFi Direct (WiFi-D), Bluetooth^{®}, Zigbee etc. The wired transceiver 450 may include a wired transmitter 452 and a wired receiver 454 configured for wired communication, e.g., a network interface that may be utilized to communicate with the network 135 to send communications to, and receive communications from, the TRP 300, for example, and/or one or more other entities. The wired transmitter 452 may include multiple transmitters that may be discrete components or combined/integrated components, and/or the wired receiver 454 may include multiple receivers that may be discrete components or combined/integrated components. The wired transceiver 450 may be configured, e.g., for optical communication and/or electrical communication.

The description herein may refer to the processor 410 performing a function, but this includes other implementations such as where the processor 410 executes software (stored in the memory 411) and/or firmware. The description herein may refer to the server 400 performing a function as shorthand for one or more appropriate components (e.g., the processor 410 and the memory 411) of the server 400 performing the function.

The configuration of the server 400 shown in FIG. 4 is an example and not limiting of the disclosure, including the claims, and other configurations may be used. For example, the wireless transceiver 440 may be omitted. Also or alternatively, the description herein discusses that the server 400 is configured to perform or performs several functions, but one or more of these functions may be performed by the TRP 300 and/or the UE 200 (i.e., the TRP 300 and/or the UE 200 may be configured to perform one or more of these functions).

### Positioning Techniques

For terrestrial positioning of a UE 105 in cellular networks, techniques such as Advanced Forward Link Trilateration (AFLT), Observed Time Difference Of Arrival (OTDOA) and DL-TDOA often operate in "UE-assisted" mode in which measurements of reference signals (e.g., PRS, CRS, etc.) transmitted by base stations are taken by the UE 105 and then provided to a location server such as LMF 120. The location server then calculates the position of the UE 105 based on the measurements and known locations of the base stations.

A UE 105 may also use a Satellite Positioning System (SPS) (e.g. a Global Navigation Satellite System (GNSS)) for high-accuracy positioning using assisted GNSS (A-GNSS), precise point positioning (PPP) or real time kinematic (RTK) technology. These technologies use assistance data such as GNSS measurements obtained by ground-based stations, also referred to as reference stations.

In UE-assisted positioning, the UE 105 sends measurements (e.g., RSTD, AOA, RSRP, etc.) to the positioning server (e.g., LMF 120). The positioning server may have a base station almanac (BSA) that contains multiple 'entries' or 'records', one record per cell, where each record contains a geographical base station or antenna location but also may include other data. An identifier of the 'record' among the multiple 'records' in the BSA may be referenced. The BSA and the measurements from the UE 105 may be used to compute the position of the UE 105.

In conventional UE-based positioning, a UE 105 computes its own position, thus avoiding sending measurements to the network (e.g., location server), which in turn improves latency and scalability. The UE 105 may use relevant BSA record information (e.g., locations of gNBs 110 (more broadly base stations)) from the network.

Positioning techniques may be characterized and/or assessed based on one or more criteria such as position determination accuracy and/or latency. Latency is a time elapsed between an event that triggers determination of position-related data and the availability of that data at a positioning system interface, e.g., an interface between the external client 130 and the GMLC 125. At initialization of a positioning system, the latency for the availability of position-related data is called time to first fix (TTFF), and may be larger than latencies after the TTFF. An inverse of a time elapsed between two consecutive position-related data availabilities is called an update rate, i.e., the rate at which position-related data are generated after the first fix.

One or more of many different positioning techniques (also called positioning methods) may be used to determine a position of an entity such as one of the UEs 105, 106. For example, known position-determination techniques include RTT, multi-RTT, OTDOA, UL-TDOA, DL-TDOA, Enhanced Cell Identification (E-CID), DL-AOD, UL-AOA, etc. RTT uses a time for a signal to travel from one entity to another and back to determine a range between the two entities. The range, plus a known location of a first one of the entities and an angle between the two entities (e.g., an azimuth angle) can be used to determine a location of the second of the entities. In multi-RTT (also called multi-cell RTT), multiple ranges from one entity (e.g., a UE 105) to other entities (e.g., TRPs) and known locations of the other entities may be used to determine the location of the one entity. In TDOA techniques, the difference in travel times between one entity and other entities may be used to determine relative ranges from the other entities and those, combined with known locations of the other entities may be used to determine the location of the one entity. Angles of arrival and/or departure may be used to help determine location of an entity. For example, an angle of arrival or an angle of departure of a signal combined with a range between devices (determined using signal, e.g., a travel time of the signal, a received power of the signal, etc.) and a known location of one of the devices may be used to determine a location of the other device. The angle of arrival or departure may include an azimuth angle relative to a reference direction such as true north. The angle of arrival or departure may also or instead include a zenith angle relative to directly upward from an entity (i.e., relative to radially outward from a center of Earth). E-CID uses the identity of a serving cell, the timing advance (i.e., the difference between receive and transmit times at the UE), estimated timing and power of detected neighbor cell signals, and possibly angle of arrival (e.g., of a signal at the UE from the base station or vice versa) to determine location of the UE. In TDOA, the difference in arrival times at a receiving device of signals from different sources along with known locations of the sources and known offset of transmission times from the sources are used to determine the location of the receiving device.

In a network-centric RTT estimation, the serving base station instructs a UE to scan for / receive RTT measurement signals (e.g., PRS) on serving cells of two or more neighboring base stations (and typically the serving base station, as at least three base stations are needed). The one of more base stations transmit RTT measurement signals on low reuse resources (e.g., resources used by the base station to transmit system information) allocated by the network (e.g., by the LMF 120). The UE records the arrival time (also referred to as a receive time, a reception time, a time of reception, or a time of arrival (ToA)) of each RTT measurement signal relative to the UE's current downlink timing (e.g., as derived by the UE from a DL signal received from its serving base station), and transmits a common or individual RTT response message (e.g., SRS (sounding reference signal) for positioning, UL-PRS) to the one or more base stations (e.g., when instructed by its serving base station) and may include the time difference (e.g., UE Rx-Tx) between the ToA of the RTT measurement signal and the transmission time of the RTT response message in a payload of each RTT response message. The RTT response message would include a reference signal from which the base station can deduce the ToA of the RTT response. By combining the difference (BS Rx-Tx) between the transmission time of the RTT measurement signal from the base station and the ToA of the RTT response at the base station with the UE-reported time difference (UE Rx-Tx), the base station can deduce the propagation time between the base station and the UE, from which the base station can determine the distance between the UE and the base station by assuming the speed of light during this propagation time.

A UE-centric RTT estimation is similar to the network-based method, except that the UE transmits uplink RTT measurement signal(s) (e.g., when instructed by a serving base station), which are received by multiple base stations in the neighborhood of the UE. Each involved base station responds with a downlink RTT response message, which may include a BS Rx-Tx measurement in the RTT response message payload.

For both network-centric and UE-centric procedures, the side (network or UE) that performs the RTT calculation typically (though not always) transmits the first message(s) or signal(s) (e.g., RTT measurement signal(s)), while the other side responds with one or more RTT response message(s) or signal(s) that may include the difference between the ToA of the first message(s) or signal(s) and the transmission time of the RTT response message(s) or signal(s).

A multi-RTT technique may be used to determine position. For example, a first entity (e.g., a UE) may send out one or more signals (e.g., unicast, multicast, or broadcast from the base station) and multiple second entities (e.g., other TSPs such as base station(s) and/or UE(s)) may receive a signal from the first entity and respond to this received signal. The first entity receives the responses from the multiple second entities. The first entity (or another entity such as an LMF 120) may use the responses from the second entities to determine ranges to the second entities and may use the multiple ranges and known locations of the second entities to determine the location of the first entity by trilateration.

In some instances, additional information may be obtained in the form of an angle of arrival (AOA) or angle of departure (AOD) that defines a straight line direction (e.g., which may be in a horizontal plane or in three dimensions) or possibly a range of directions (e.g., for the UE from the locations of base stations). The intersection of two directions can provide another estimate of the location for the UE.

For positioning techniques using PRS (Positioning Reference Signal) signals (e.g., TDOA and RTT), PRS signals sent by multiple TRPs are measured and the arrival times of the signals, known transmission times, and known locations of the TRPs used to determine ranges from a UE to the TRPs. For example, an RSTD (Reference Signal Time Difference) may be determined for PRS signals received from a pair of TRPs or a pair of BSs and used in a TDOA technique to determine a position (location) of a UE. A positioning reference signal may be referred to as a PRS or a PRS signal. The PRS signals are typically sent using the same power and PRS signals with the same signal characteristics (e.g., same frequency shift) may interfere with each other such that a PRS signal from a more distant TRP may be overwhelmed by a PRS signal from a closer TRP such that the signal from the more distant TRP may not be detected. PRS muting may be used to help reduce interference by muting some PRS signals (reducing the power of the PRS signal, e.g., to zero and thus not transmitting the PRS signal). In this way, a weaker PRS signal (at a UE) may be more easily detected by the UE without a stronger PRS signal interfering with the weaker PRS signal.

Positioning reference signals (PRS) include downlink PRS (DL PRS) and uplink PRS (UL PRS) (which may be called SRS (Sounding Reference Signal) for positioning). PRS may comprise PRS resources or PRS resource sets of a frequency layer. A DL PRS positioning frequency layer (or simply a frequency layer) can be a collection of DL PRS resource sets, from one or more TRPs, that have common parameters configured by higher-layer parameters *DL-PRS-PositioningFrequencyLayer, DL-PRS-ResourceSet,* and *DL-PRS-Resource.* Each frequency layer has a DL PRS subcarrier spacing (SCS) for the DL PRS resource sets and the DL PRS resources in the frequency layer. Each frequency layer has a DL PRS cyclic prefix (CP) for the DL PRS resource sets and the DL PRS resources in the frequency layer. Also, a DL PRS Point A parameter defines a frequency of a reference resource block (and the lowest subcarrier of the resource block), with DL PRS resources belonging to the same DL PRS resource set having the same Point A and all DL PRS resource sets belonging to the same frequency layer having the same Point A. A frequency layer also has the same DL PRS bandwidth, the same start PRB (and center frequency), and the same value of comb-size.

A TRP may be configured, e.g., by instructions received from a server and/or by software in the TRP, to send DL PRS according to a schedule. According to the schedule, the TRP may send the DL PRS intermittently, e.g., periodically at a consistent interval from an initial transmission. The TRP may be configured to send one or more PRS resource sets. A resource set is a collection of PRS resources across one TRP, with the resources having the same periodicity, a common muting pattern configuration (if any), and the same repetition factor across slots. Each of the PRS resource sets comprises multiple PRS resources, with each PRS resource comprising multiple Resource Elements (REs) that can span multiple Physical Resource Blocks (PRBs) within N (one or more) consecutive symbol(s) within a slot. A PRB is a collection of REs spanning a quantity of consecutive symbols in the time domain and a quantity of consecutive sub-carriers in the frequency domain. In an OFDM symbol, a PRS resource occupies consecutive PRBs. Each PRS resource is configured with an RE offset, slot offset, a symbol offset within a slot, and a number of consecutive symbols that the PRS resource may occupy within a slot. The RE offset defines the starting RE offset of the first symbol within a DL PRS resource in frequency. The relative RE offsets of the remaining symbols within a DL PRS resource are defined based on the initial offset. The slot offset is the starting slot of the DL PRS resource with respect to a corresponding resource set slot offset. The symbol offset determines the starting symbol of the DL PRS resource within the starting slot. Transmitted REs may repeat across slots, with each transmission being called a repetition such that there may be multiple repetitions in a PRS resource. The DL PRS resources in a DL PRS resource set are associated with the same TRP and each DL PRS resource has a DL PRS resource ID. A DL PRS resource ID in a DL PRS resource set is associated with a single beam transmitted from a single TRP (although a TRP may transmit one or more beams).

A PRS resource may also be defined by quasi-co-location and start PRB parameters. A quasi-co-location (QCL) parameter may define any quasi-co-location information of the DL PRS resource with other reference signals. The DL PRS may be configured to be QCL type D with a DL PRS or SS/PBCH (Synchronization Signal/Physical Broadcast Channel) Block from a serving cell or a non-serving cell. The DL PRS may be configured to be QCL type C with an SS/PBCH Block from a serving cell or a non-serving cell. The start PRB parameter defines the starting PRB index of the DL PRS resource with respect to reference Point A. The starting PRB index has a granularity of one PRB and may have a minimum value of 0 and a maximum value of 2176 PRBs.

A PRS resource set is a collection of PRS resources with the same periodicity, same muting pattern configuration (if any), and the same repetition factor across slots. Every time all repetitions of all PRS resources of the PRS resource set are configured to be transmitted is referred as an "instance". Therefore, an "instance" of a PRS resource set is a specified number of repetitions for each PRS resource and a specified number of PRS resources within the PRS resource set such that once the specified number of repetitions are transmitted for each of the specified number of PRS resources, the instance is complete. An instance may also be referred to as an "occasion." A DL PRS configuration including a DL PRS transmission schedule may be provided to a UE to facilitate (or even enable) the UE to measure the DL PRS.

RTT positioning is an active positioning technique in that RTT uses positioning signals sent by TRPs to UEs and by UEs (that are participating in RTT positioning) to TRPs. The TRPs may send DL-PRS signals that are received by the UEs and the UEs may send SRS (Sounding Reference Signal) signals that are received by multiple TRPs. A sounding reference signal may be referred to as an SRS or an SRS signal. In 5G multi-RTT, coordinated positioning may be used with the UE sending a single UL-SRS that is received by multiple TRPs instead of sending a separate UL-SRS for each TRP.

RTT positioning may be UE-based or UE-assisted. In UE-based RTT, a UE 200 determines the RTT and corresponding range to each of the TRPs 300 and the position of the UE 200 based on the ranges to the TRPs 300 and known locations of the TRPs 300. In UE-assisted RTT, the UE 200 measures positioning signals and provides measurement information to a TRP 300, and the TRP 300 determines the RTT and range. The TRP 300 provides the range to a location server, e.g., the server 400, and the server uses the ranges from multiple TRPs 300 and known TRP 300 locations to determine a location for the UE 200. In another implementation of multi-cell RTT, the UE 200 and one or more TRPs 300 provide measurements (e.g. Rx-Tx measurements) to a location server, e.g., the server 400, and the server determines an RTT and range between the UE 200 and each TRP 300 and then uses the ranges and known TRP 300 locations to determine a location for the UE 200.

Various positioning techniques are supported in 5G NR. The NR native positioning methods supported in 5G NR include DL-only positioning methods, UL-only positioning methods, and DL+UL positioning methods. Downlink-based positioning methods include DL-TDOA and DL-AOD. Uplink-based positioning methods include UL-TDOA and UL-AOA. Combined DL+UL-based positioning methods include RTT with one base station and multi-RTT with multiple base stations.

### Aerial UE Positioning

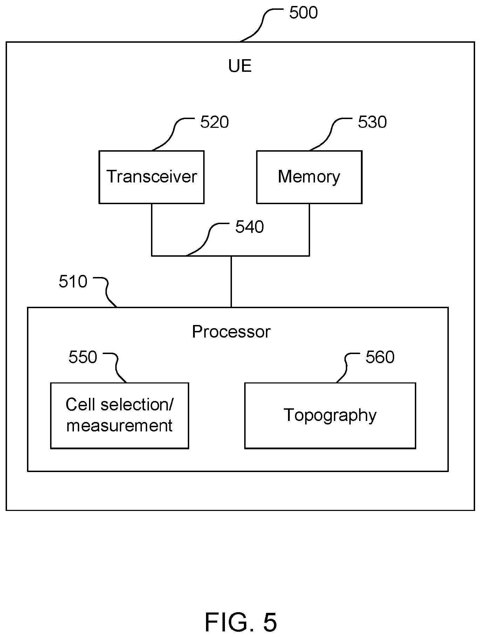

Referring to FIG. 5, with further reference to FIGS. 1-3, a UE 500 includes a processor 510, a transceiver 520, and a memory 530 communicatively coupled to each other by a bus 540. The UE 500 may include the components shown in FIG. 5. The UE 500 may include one or more other components such as any of those shown in FIG. 2 such that the UE 200 may be an example of the UE 500. For example, the processor 510 may include one or more of the components of the processor 210. The transceiver 520 may be configured similarly to the transceiver 215 (and may include the antenna 246) and the memory 530 may be configured similarly to the memory 211, e.g., including software with processor-readable instructions configured to cause the processor 510 to perform functions. The description may refer to the processor 510 performing a function, but this includes other implementations such as where the processor 510 executes software (stored in the memory 530) and/or firmware.

The description herein may refer to the UE 500 performing a function as shorthand for one or more appropriate components (e.g., the processor 510 and the memory 530) of the UE 500 performing the function. The processor 510 (possibly in conjunction with the memory 530 and, as appropriate, the transceiver 520) may include a cell selection/measurement unit 550 and a topography unit 560 configured to, respectively, obtain information regarding one or more cells, select one or more cells for measurement and measure the appropriate positioning signal(s), and to obtain and possibly analyze topographic information relevant to the UE 500 and one or more TRPs 300. The cell selection/measurement unit 550 and the topography unit 560 are discussed further below, and the description may refer to the processor 510 generally, or the UE 500 generally, as performing any of the functions of the cell selection/measurement unit 550 and/or the topography unit 560.

Referring to **FIG. 6****,** with further reference to FIGS. 1-5, an environment 600 for aerial UE positioning includes the UE 500 (in this case, configured as an aerial UE 105), TRPs 300-1, 300-2, 300-3, 300-4, 300-5 (e.g., which may each correspond to a separate gNB 110 and/or to geographically separated elements of a common gNB 110), the server 400 (e.g., a location server such as an LMF 120 or an SLP), and buildings 610, 620, 630. The environment 600 may be used for UE-assisted positioning where one or more UEs provide information to a network entity, e.g., the server 400, that the network entity may use to determine positioning information (e.g., one or more UE locations (positions), one or more ranges (e.g., pseudoranges) between the UE and one or more reference locations (e.g., locations of TRPs)). Also or alternatively, the environment 600 may be used for UE-based positioning where the UE 500, possibly using assistance data from one or more network entities, determines positioning information (e.g., one or more ranges, one or more positioning signal measurements, one or more locations of the UE 500). In environments such as the environment 600, aerial UEs may receive few multi-path signals and PRS received by an aerial UE may be strong and cause interference. Therefore, it may be helpful to select positioning signal cells for which to measure positioning signals to determine positioning information, for example because some TRPs 300 may be closer than other TRPs 300 to the UE 500, but be less desirable for positioning signal measurements due to lack of line of sight from the TRP(s) 300 to the UE 500. For example, the UE 500 may obtain (e.g., receive via the transceiver 520) one or more transmission characteristics of PRS, obtain topographic information of the environment 600, use the PRS transmission characteristic(s) and the topographic information to select one or more PRS to measure, and measure the selected PRS. As another example, a network entity may obtain one or more transmission characteristics of PRS of one or more TRPs, obtain horizontal and vertical location information for a UE, use the location information and the PRS transmission characteristic(s) to determine one or more selected PRS for the UE to measure, and instruct the UE to measure only the selected PRS. Either of these techniques may help reduce interference during PRS measurement, improve positioning accuracy and/or latency, and reduce processing power used for positioning.

Typically, in UE-based positioning, the server 400 provides TRP (e.g., gNB/eNB) coordinates and respective PRS parameters and the UE 500 (e.g., the cell selection/measurement unit 550) determines which cells to measure and determines a location of the UE 500. It is possible, however, in UE-based positioning that the server 400 determines which cells for the UE 500 to measure and provides indications/instructions to the UE 500 as to which cells to measure. Typically, in UE-assisted positioning, the server 400 decides which cells that the UE 500 should measure, instructs the UE 500 accordingly, and the UE 500 measures the cells and returns requested measurements to the server 400 and the server 400 determines the location of the UE 500. It is possible, however, in UE-assisted positioning for the UE 500 to determine which cells to measure. A cell may be uniquely identified by a UE 500 from a cell ID broadcast by the respective TRP 300 (e.g. a physical cell ID or a global cell ID) or by distinct or unique characteristics of DL PRS broadcast by the TRP 300 for the cell. Distinct or unique characteristics may include a distinct or unique PRS ID used to encode a PRS, a distinct frequency, a distinct set of transmission times, distinct muting times, a distinct bandwidth or some combination of these. In performing a measurement of a particular DL PRS for a particular cell, a UE 500 may be provided with these distinct or unique characteristics (e.g. by a location server 400 as part of assistance data for positioning) and can then filter and measure received signals based on the provided characteristics such that only the particular DL PRS for the particular cell is measured.

Positioning of the aerial UE 500 in FIG. 6 may be supported using either UE-assisted position methods or UE-based position methods. With UE-assisted position methods, the UE 500 may indicate that the UE 500 is an aerial UE (e.g., that the UE 500 is a UAV) to the server 400 in an LPP Provide Capabilities message (or some other LPP message). The UE 500 may also provide the server 400 with information including the approximate UE height, approximate UE horizontal location, current horizontal/vertical UE velocity and/or UE flight path information, according to which of these are available. The server 400 can use this information to select cells that the UE 500 should measure and send information (e.g., information about DL PRS as discussed above) for these selected cells to the UE 500. For example, the server 400 can select cells managed by TRPs 300-1, 300-2 and 300-3 since these TRPs are in LOS to the UE 500 but can exclude cells managed by TRPs 300-4 and 300-5, since these TRPs are not in LOS to the UE 500. The LOS determination can be based on the information provided by the UE 500 and can make use of a three-dimensional LOS determination where the UE 500 height as well as UE 500 horizontal location and the heights and sizes of buildings such as buildings 610, 620, and 630 are taken into account. The server 400 can also make use of future locations of the UE 500 when selecting cells - e.g., may select a cell not currently in LOS to the UE 500 but that will later be in LOS due to later movement of the UE 500. In estimating the UE 500 location(s), the server 400 may use less accurate locations than the server 400 will later compute or make use of accurate previous UE 500 locations and expected future movement in order to help determine future locations of the UE 500 more accurately. The server 400 can also take into consideration the relative heights, distances, and the DL PRS transmission power of each of the TRPs 300. The server 400 can consider the topography of buildings nearby to the UE 500, such as buildings 610, 620, and 630, to estimate whether the UE 500 will have LOS or NLOS to the antenna(s) of a particular TRP 300 when selecting cells for the UE 500 to measure. For example, the server 400, can select cells which are LOS even when distant from the UE 500 and not include cells which are NLOS even when close to the UE 500.

When UE-based positioning of the UE 500 in environment 600 is used, the server 400 may send the height, horizontal location, and PRS cell transmission power for each of the TRPs 300 to the UE 500 in assistance information. The server 400 can also send the topography of buildings (e.g., buildings 610, 620, and 630) around the UE 500. Topography can include location, width, breadth, and height of each building. This information may help the aerial UE 500 to select particular TRPs 300 or particular cells managed by particular TRPs 300 and to measure DL PRS transmitted by these TRPs 300 or transmitted within these cells. The UE 500 may select the TRPs 300 or the cells for the TRPs 300 based on the approximate height of the UE 500, approximate horizontal location of the UE 500, approximate direction of the UE 500, and/or approximate speed (horizontal/vertical) of the UE 500, and based on whether each TRP 300 will be LOS or NLOS. If the UE 500 is equipped with one or more cameras (e.g., the camera 218), the topography of the buildings (e.g., buildings 610, 620, 630) surrounding the UE 500 can also be derived by the UE 500 using the camera(s). The topography obtained by the UE 500 using the camera(s) may allow the UE 500 to obtain a second location of the UE 500 via the camera(s) and could be used to augment or assist a location obtained using measurements of DL PRS by the UE 500 from the TRPs 300, which can improve accuracy and reliability. For example, the second location could be used by the UE 105 to help determine which of the TRPs 300 are in LOS to the UE 500 which can help select cells or the TRPs 300 whose DL PRS can be measured by the UE 500.

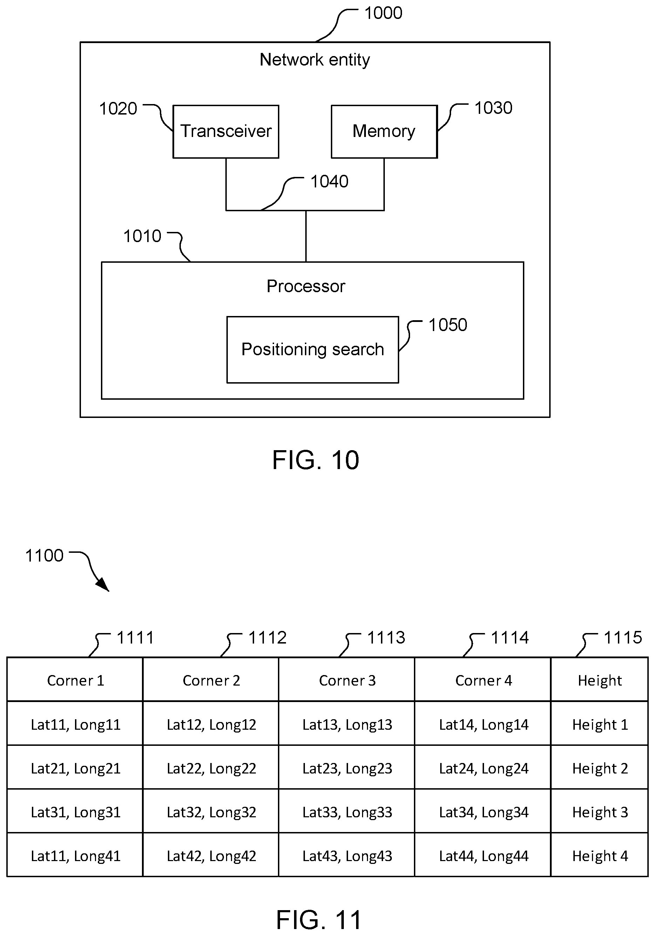

Referring to **FIG. 10****,** a network entity 1000, of which the server 400 shown in FIG. 4 (e.g., an LMF 120) and/or the TRP 300 shown in FIG. 3 (e.g., a gNB 110) may be an example, includes a processor 1010, a transceiver 1020, and a memory 1030 communicatively coupled to each other by a bus 1040. The transceiver 1020 may be configured similarly to the transceiver 415 or the transceiver 315 (and may include the antenna 446 or the antenna 346) and the memory 1030 may be configured similarly to the memory 411 or the memory 311, e.g., including software with processor-readable instructions configured to cause the processor 1010 to perform functions. The description may refer to the processor 1010 performing a function, but this includes other implementations such as where the processor 1010 executes software (stored in the memory 1030) and/or firmware. The description may refer to the network entity 1000 performing a function as shorthand for one or more appropriate components (e.g., the processor 1010 and the memory 1030) of the network entity 1000 performing the function. The processor 1010 (possibly in conjunction with the memory 1030 and, as appropriate, the transceiver 1020) may include a positioning-search unit 1050 configured to determine and send a positioning-search response to the UE 500. The positioning-search unit 1050 is discussed further below, and the description may refer to the processor 1010 generally, or the network entity 1000 generally, as performing any of the functions of the positioning-search unit 1050.

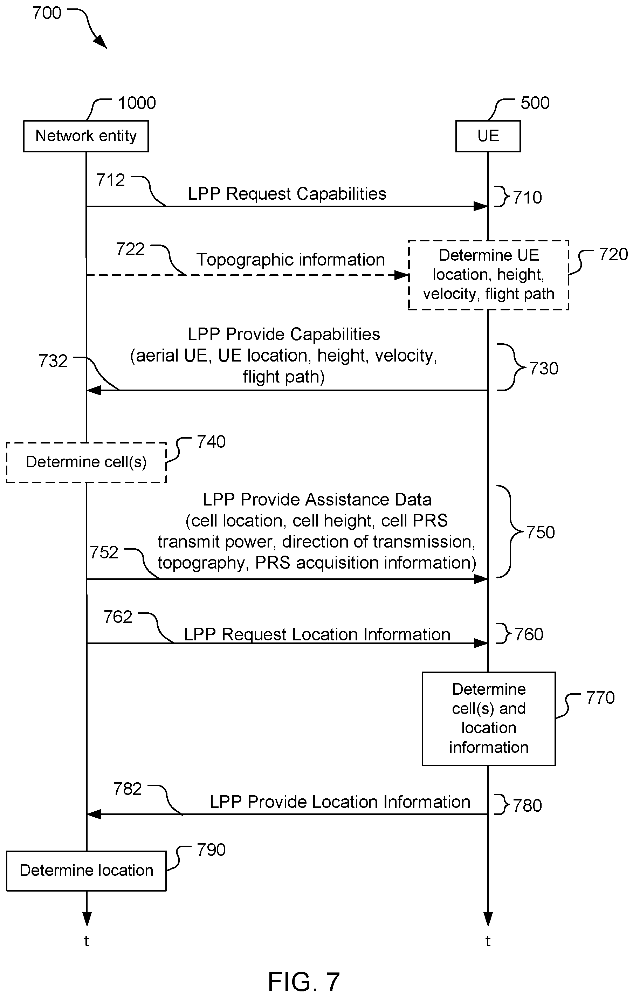

Referring also to **FIG. 7****,** the UE 500 and the network entity 1000 may be configured to exchange information and the UE 500 and/or the network entity 1000 may be configured to determine which cells to select for positioning signal measurements by UE 500. FIG. 7 shows a signaling and process flow 700 of aerial UE position signaling and determining positioning information for the aerial UE 500. The flow 700 includes the stages shown, but the flow 700 is an example only, and stages may be added, rearranged, and/or removed.

At stage 710, the network entity 1000 sends an LPP request capabilities message 712 to the UE 500. The network entity 1000 is configured to prepare and send the LPP (LTE Positioning Protocol) request capabilities message 712 to the UE 500. The message 712 (and other messages between the UE 500 and the network entity 1000 discussed below) is sent in accordance with the LPP protocol. The message 712 requests the UE 500 to provide capabilities of the UE 500 regarding positioning. The message 712 may indicate the types of capabilities desired (e.g., needed) by the network entity 1000. The processor 1010, the memory 1030 (e.g., software), the transceiver 1020 (e.g., the wireless transmitter 442 (342) and/or the wired transmitter 452 (352)), and the antenna 446 (346) (for wireless communications) may comprise means for sending the LPP request capabilities message 712.

At optional stage 720, the UE 500 may determine location, height, velocity(ies), and/or a flight path of the UE 500. For example, the processor 510 may determine a location, i.e., a horizontal location (e.g., latitude and longitude) of the UE 500 using trilateration (based on one or more measured signals) and/or dead reckoning (based on one or more sensor measurements) and/or one or more other positioning techniques and/or determine location from received location information, e.g., location information received from the SPS receiver 217. The processor 510 may determine height of the UE 500, i.e., vertical location, i.e., elevation. The horizontal location may be relative to a global reference and the vertical location may be relative to a global reference (e.g., average sea level) or a local reference (e.g., ground at the horizontal location). The processor 510 may be configured to determine horizontal and/or vertical velocity and/or three-dimensional velocity. For example, the processor 510 may be configured to use one or more sensor measurements and/or multiple determined locations to calculate one or more velocities. The velocity(ies) may be useful in determining a future location of the UE 500 that may be used for determining which cell(s) the UE 500 should measure (i.e., which positioning signal(s) from which corresponding TRP(s) the UE 500 should measure) and when. Also or alternatively, the processor 510 may be configured to determine a flight path of the UE 500. For example, the processor 510 may be configured to calculate a flight path based on a start location and an end location and topography (i.e., the natural and artificial physical features) between the start location and the end location. As another example, the processor 510 may receive topographic information from the network entity 1000 via the transceiver 520 (as discussed later) and/or may access topographic information from the memory 530 (e.g., captured by the camera 218) and/or may obtain topographic information (directly) from the camera 218. The flight path may be useful in determining a future location of the UE 500 that may be used for determining which cell(s) the UE 500 should measure and when. The processor 510 and the memory 530 (and possibly other apparatus such as one or more of the sensor(s) 213 and/or the SPS receiver 217) may comprise means for determining location, height, velocity(ies), and/or a flight path of the UE 500.

At stage 730, the UE 500 provides an LPP provide capabilities message 732 to the network entity 1000. For example, the processor 510 may be configured to send the message 732 via the transceiver 520 (e.g., the wireless transmitter 242 and/or the wired transmitter 252), and the antenna 246 as appropriate, to the network entity 1000. The LPP provide capabilities message 732 may include positioning capabilities of the UE 500, including the capabilities corresponding to the type(s) of capabilities indicating by the network entity 1000 in the LPP request capabilities message 712. The processor 510 may be configured to include further information in the message 712, including an indication that the UE 500 is an aerial UE, and/or other information if available including the UE location, the UE height, the UE velocity(ies), and/or the flight path of the UE 500.

At optional stage 740, the network entity 1000 determines which cell(s) and/or which positioning signals the UE 500 should measure. The stage 740 may be performed for UE-assisted positioning and/or for UE-based positioning, but will typically be omitted for UE-based positioning. The processor 1010 may be configured to use the knowledge that the UE 500 is an aerial UE to determine which cell(s) and/or which positioning signals the UE 500 should measure. For example, the processor 1010 may be configured to use the UE location, height, velocity(ies), and/or flight path provided in the LPP provide capabilities message 732 (or otherwise obtained) to determine which cell(s) and/or which positioning signals the UE 500 should measure, e.g., which positioning signals that the UE 500 at a present and/or future location will be able to receive well, e.g., that correspond to TRPs 300 that will be in line of sight (LOS) (e.g., not blocked by buildings 610, 620, and 630) when the UE 500 is at the present and/or future location. The directions of PRS signals (if known) may also be used - e.g., to determine cells which transmit at least one PRS signal in the general direction of the UE 500. As shown in the example of FIG. 6, with the UE 500 at the location shown (which may be a present or future location), the UE 500 will have LOS with the TRPs 300-1, 300-2, 300-3 and will be non-line of sight (NLOS) with the TRPs 300-4, 300-5 due to the buildings 610, 620 being between the UE 500 and the TRPs 300-4, 300-5, respectively. A signal 650 from the TRP 300-5 directed toward the UE 500 may reflect off the building 620, and only multi-path signals, e.g., a signal 660, from the TRP 300-5 can reach the UE 500 at the location shown. The processor 1010 may be configured to predict future locations based on the velocity(ies) of the UE 500 and/or the trajectory(ies) of the UE 500 and/or the flight path of the UE 500. The processor 1010 may analyze the present and/or future locations of the UE 500, the locations of the TRPs 300, and the topography between the UE location(s) and the locations of TRPs 300 to determine which cell(s) and/or which positioning signals to measure, e.g., which cell(s) and/or which positioning signals will have LOS with the UE 500. The processor 1010 may select one or more cells and/or one or more positioning signals for the UE 500 to measure even though the respective TRP(s) 300 is(are) further than one or more other TRPs whose respective cell(s) and/or respective positioning signals is(are) not selected to be measured, where the TRP(s) 300 of the selected cell(s) and/or the selected positioning signals has(have) LOS with the UE 500 while the TRP(s) 300 of the non-selected cell(s) and/or non-selected positioning signals does(do) not. The processor 1010 may use one or more factors other than LOS in addition to, or instead of, whether the UE 500 will have LOS to a TRP 300 to determine whether the UE 500 should measure a particular positioning signal. For example, the processor 1010 may consider TRP 300 transmit power, relative heights of the location(s) of the UE 500 and the TRP 300, distances between the location(s) of the UE 500 and the locations of the TRPs 300, flight path, locations and sizes of buildings which may block LOS signals (e.g., buildings 610, 620, and 630), and/or expected receive power (e.g., based on transmit power and distance between the UE 500 and the transmitting TRP 300) to determine which cell(s) and/or which positioning signals to measure, e.g., which cell(s) and/or which positioning signals will be received the best (e.g., with strongest power, least noise, etc.). The description, including the claims, may refer to determining which positioning signal(s) to measure and this may include determining which cell(s) to measure, e.g., all positioning signal(s) of which cell(s), or which cell(s) and within the cell(s) which positioning signal(s), or which positioning signal(s) with or without regard to which cell each positioning signal corresponds.

The network entity 1000 may be configured to track the dynamically-changing height of the UE 500, e.g., to help determine which cell(s) the UE 500 should measure. For example, the processor 1010 may configure one or more events regarding the height of the UE 500. The processor 1010 may coordinate with one or more TRPs 300 to configure the event(s) regarding the height of the UE 500. For example, the processor 1010 may configure (with or without using one or more of the TRPs 300) events H1, H2 regarding height thresholds. The processor 1010 may be configured to respond to determining that the UE 500 passes through (e.g., exceeds or drops below) a height corresponding to the event H1 and/or passes through a height corresponding to the event H2 by taking an appropriate action. For example, the processor 1010 may respond by redetermining the cell(s) that the UE 500 should measure. For example, the processor 1010 may affect a determination of the cell(s) to measure, e.g., to make a particular cell more likely to be measured in response to the UE 500 exceeding the height corresponding to the event H2, or less likely to be measured in response to the UE 500 dropping below the height corresponding to the event H1.

The network entity 1000 may be configured to affect PRS muting of one or more TRPs 300, e.g., to help reduce interference of PRS signals received by the UE 500. With PRS muting, a scheduled transmission of a PRS signal is inhibited due to a muting indication such that the scheduled PRS signal is not transmitted. The PRS muting may be recurring according to a PRS muting pattern. The processor 1010 may determine expected arrival times of PRS signals based on relative locations (e.g., distances) of the UE 500 and the TRPs 300 and scheduled transmission times of PRS signals from the respective TRPs 300. The processor 1010 may determine PRS muting for one or more of the TRPs 300 to reduce interference of the PRS signals received at the UE 500, e.g., to reduce concurrent receipt of PRS signals at the UE 500, at least concurrent receipt of PRS signals in cells that the UE 500 should measure. The processor 1010 may thus cause muting of PRS signals from one or more TRPs 300 such that the PRS of the TRP(s) 300 that is(are) close to the UE 500 will not interfere with the PRS from the TRP(s) 300 that is(are) further from the UE 500.

At stage 750, the network entity 1000 sends an LPP provide assistance data message 752 to the UE 500. For example, the processor 1010 may be configured to send the message 752 via the transceiver 1020 (e.g., via the wireless transmitter 442 (342) and/or the wired transmitter 452 (352)) and the antenna 446 (346) as appropriate to the UE 500. The assistance information in the message 752 may include one or more transmission characteristics of positioning signals to be transmitted by TRPs 300. For example, the assistance data in the message 752 may include PRS acquisition information (e.g., frequency, bandwidth, timing, coding, etc.) for the cell(s) that the UE 500 is to measure to enable the UE 500 to measure the PRS from such cell(s). The message 752 may include timing information regarding when the UE 500 should measure the respective cell(s), e.g., to measure cell(s) based on the UE location (e.g., a present or future location) such that the network entity 1000 may instruct the UE 500 to measure different cell(s) at different UE 500 locations. Also or alternatively, the processor 1010 may be configured to send PRS acquisition information for more cells than just the cell(s) that the UE 500 is to measure, and to provide one or more indications of which cell(s) the UE 500 should measure. Also or alternatively, the processor 1010 may be configured to send assistance data for cells to allow the UE 500 to determine which of the cells to measure. For example, the processor 1010 may be configured to include, in the message 752 and for each TRP 300, the location of the TRP 300 (or the location of an antenna for the TRP 300), the height of the TRP 300 (or the height of an antenna for the TRP 300), a PRS transmit power, and/or a PRS transmit direction (e.g., PRS beam angle and PRS beam width) for each of one or more cells and/or one or more PRSs supported by the TRP 300. The processor 1010 may be configured to include topographic information in the message 752 to help the UE 500 determine which cell(s) to measure. The topographic information may include, for example, location, ground height and physical dimensions (e.g., width in two orthogonal directions and height, with objects assumed to be right rectangular prisms) of objects (e.g., buildings). The topographic information may be relative to a location, e.g., with buildings represented by horizontal and vertical angle ranges relative to a location estimate. Still other forms of topographic information are possible.

It is noted that in some implementations, at least some of the information in the LPP provide assistance data message 752 may be obtained by the UE 500 from information broadcast by a TRP 300 or gNB 110 (e.g. a serving gNB 110). For example, this may include information on locations of TRPs and/or characteristics of DL PRS signals.

The UE 500 may store topographic information, e.g., in the memory 530, and/or may obtain topographic information from a remote entity such as the network entity 1000. For example, referring also to FIG. 11, the UE 500 may store a database 1100 of topographic information and may update the database 1100 with topographic information determined by the UE 500 (e.g., captured by the camera 218, or calculated, etc.) and/or topographic information received from the network entity 1000 (e.g., in the message 752 and/or the message 722 described later). The database 1100 provides indications of locations and shapes of objects, in this example, with the objects assumed to be right rectangular prisms for the sake of providing a simple illustration. In the database 1100, topographic information is stored in the form of four corner locations and a height, such that each entry of four corner values and a height value describe a right rectangular prism. The database 1100 includes entries, with each entry having a value in each of a corner 1 field 1111, a corner 2 field 1112, a corner 3 field 1113, a corner 4 field 1114, and a height field 1115. In each of the corner fields 1111-1114, a location of a respective corner of an object is stored. In this example, a latitude and longitude pair is stored in each of the fields 1111-1114, although other forms of locations may be stored.

The database 1100 may thus include topographical information provided by the network entity 1000 and/or information captured by the UE 500 using one or more cameras. The UE 500 may use the database 1100 to help determine which TRPs 300 and/or which PRS signals or cells are, or will be, in LOS to the UE 500 to help determine cells at stage 770, as described later. The UE 500 may also or instead use the database 1100 to determine an independent second location of the UE 105 by comparing topographic information provided by network entity 1000 with topographical information obtained by UE 500 (e.g., using camera 218). For example, the relative locations and apparent sizes of the buildings 610, 620, 630 as visible to the UE 500 and recorded in database 1100 may correspond to a unique location in three dimensions at which the same relative locations and same apparent sizes of buildings 610, 620, 630 would be visible according to the topographical information for the buildings 610, 620 and 630 provided by network entity 1000 and also stored in the database 1100. This unique location in three dimensions may be used as the second location. The second location may be used to augment a first location obtained using measurements of signals received from the TRPs 300 as described herein. For example, the first and second locations may be combined (e.g., averaged) by the UE 500, or the second location may be sent to the network entity 1000 in the message 782 described below along with measurements of the TRPs 300 obtained by the UE 500 or along with the first location to enable the network entity 1000 to obtain an improved location of the UE 500. Also or alternatively, the second location may be included in the message 732 (e.g., if obtained as part of stage 720) which may assist the network entity 1000 to determine suitable cells at stage 740, which can improve location accuracy and reliability. The second location may also be used by the UE 500 to help determine cells at stage 770.

The database 1100 is an example, and numerous other examples of databases may be used and/or other information stored in the database 1100. For example, different descriptions of right rectangular prisms such as a location of a reference position of the object (e.g., a corner or a center of the object), a length and a width of the object, and orientation of the object (e.g., an angle of the length or width relative to true north). As another example, more-detailed information of object shapes that may or may not be right rectangular prisms may be stored. As another example, horizontal locations of objects along a street may be provided and orientations of the objects assumed to be parallel to the street, with widths and/or heights possibly assumed. Still other forms of topographic information may be used.

The network entity 1000 may store another database of topographic information and provide topographic information in a topographic information message 722 to the UE 500 (e.g., which may be sent before message 752 as in FIG. 6, after message 752, or as part of message 752). The network entity 1000 may determine what topographic information to provide to the UE 500 based on known locations and shapes of objects and based on location information regarding the UE 500, e.g., a location estimate of the UE 500, a heading of the UE 500, and/or a speed of the UE 500 (e.g., as provided in message 732). Thus, the network entity 1000 may provide topographic information of an area in the vicinity of the UE 500 (e.g., the environment 600) and/or that is in the vicinity of an expected future location of the UE 500. The UE 500 may update the database 1000 with topographic information received from the network entity 1000 in the topographic information message 722.

Referring again to FIG. 7, at stage 760, the network entity 1000 sends an LPP request location information message 762. The processor 1010 may be configured to request location information (e.g., location and/or one or more positioning signal measurements and/or one or more ranges, etc.) from the UE 500 by sending the message 762 to the UE 500 via the transceiver 1020. The message 762 may be a request for the location for UE-based positioning or, for UE-assisted positioning, may be a request for information (e.g., one or more ranges and/or one or more measurements) from which the location of the UE 500 may be determined. The message 762 may include an indication of a frequency of RSTD, UE Rx-Tx, RSRP, AOD, RTT and/or other measurements to be taken and/or reported by the UE 500, and this frequency may be determined by the network entity 1000 based upon information provided by the UE 500 in the message 732. Also or alternatively, a frequency of requesting RSTD, UE Rx-Tx, RSRP, AOD, RTT and/or other measurements may be adjusted by the network entity 1000 based upon information in the provide capabilities message 732. For example, the network entity 1000 may request that the UE 500 take RSTD, UE Rx-Tx, RSRP, AOD, RTT and/or other measurements more often if the UE 500 is highly mobile (e.g., exceeds a threshold speed), if the UE 500 is disposed in a dense topography (e.g., a region with more than a threshold density of structures, be they natural or human made), and/or if the UE is within or near to a sensitive or high priority area like an airport or a government or military installation, even if the UE 500 is not highly mobile.

At stage 770, the UE 500 may determine which cell(s) to measure and may determine location information. For example, the processor 510 may be configured to use the information regarding positions of the TRPs 300 and topographic information in the provide assistance data message 752, along with information regarding location (present and/or future), including height, of the UE 500 (determined by or provided to the UE 500) to determine which cell(s) to measure, i.e., to determine which positioning signals from which corresponding TRPs 300 to measure. The determination at stage 770 may be similar to the determination at stage 740, or may be a matter of reading instructions from the network entity 1000 (e.g., in the message 752) as to which cell(s) to measure. For example, the UE 500 may choose the cell(s) to measure based on direction and/or speed of the UE 500, elevation, anticipated elevation change, locations of TRPs, heights of TRPs, locations and sizes of buildings and other objects which may block LOS signals, directions of PRS signals (e.g., whether directed towards or away from the UE), etc.

With the cell(s) determined, the UE 500 measures the PRS from the appropriate cell(s) and determines location information as part of stage 770. For example, the UE 500 may be configured to determine one or more indications of RSTD, RSRP (Reference Signal Received Power), RSSI (Received Signal Strength Indication), RSRQ (Reference Signal Received Quality), ToA (Time of Arrival), AOA (Angle of Arrival), UE Rx-Tx, and/or range(s) to TRP(s), etc., e.g., as part of UE-assisted positioning. The UE 500 may provide a location of the UE 500 as the location information (e.g., for UE-based positioning) or as part of the location information.

At stage 780, the UE 500 provides an LPP provide location information message 782 to the network entity 1000. For example, the processor 510 may be configured to send the location information (i.e. the LPP provide location information message 782) to the network entity 1000 via the transceiver 520. What location information is provided may depend on the type of positioning being implemented. For example, for UE-assisted positioning, the UE 500 may provide information (e.g., measurements, ranges) from which the network entity 1000 may determine the location of the UE 500. For UE-based positioning, the UE 500 may provide the location of the UE 500 that the processor 510 determined.

At stage 790, and if UE-assisted positioning is used, the network entity 1000 may determine a location of the UE 500. The processor 1010 may use location information (e.g., measurements, ranges) provided by the UE 500 in the provide location information message 782 to determine the location of the UE 500 using known techniques, e.g., trilateration, triangulation. The processor 1010 may, in some cases, determine the UE location even if the UE 500 also determine the location of the UE 500 for UE-based positioning. For example, the processor 1010 may have more information and/or processing capacity available than the UE 500 and may thus be able to calculate a more accurate location.

In one or more example implementations, some stages in signaling and process flow 700 may be repeated to obtain subsequent locations of the UE 500. For example, with UE-assisted positioning, stages 740-790 may be repeated, or, with UE-based positioning, stages 760-780 may be repeated, although variants may exist in which additional stages are repeated or some stages are not repeated. In such a repetition or partial repetition of the signaling and process flow 700, a previously-obtained location (e.g., comprising a horizontal location and altitude) for the UE 500 as well as a previously-obtained velocity may be used at stage 740 (with UE-assisted positioning) or at stage 770 (with UE-based positioning) to help select cells or positioning signals for the UE 500 to measure at stage 770. In these examples, an initial estimate of a horizontal location and height of the UE 500, used by the network entity 1000 at stage 740 or by the UE 500 at stage 770 to select cells or positioning signals to measure to obtain a first location estimate for the UE 500 in a first iteration of the signaling and process flow 700, may be very approximate (e.g., may be based on a current serving cell for the UE 500 and some assumed height). In subsequent iterations of the signaling and process flow 700, the previously-obtained location(s) and velocity(ies) of the UE 500 may be used to help select cells or positioning signals for the UE 500 to measure to obtain subsequent locations. Because these previously-obtained location(s) and velocity(ies) of the UE 500 may be more accurate, cells and/or positioning signals may be selected with greater effectiveness at stage 740 or stage 770, leading to more accurate subsequent location of UE 500, which may facilitate tracking of the UE 500 over an extended period.

### Operation

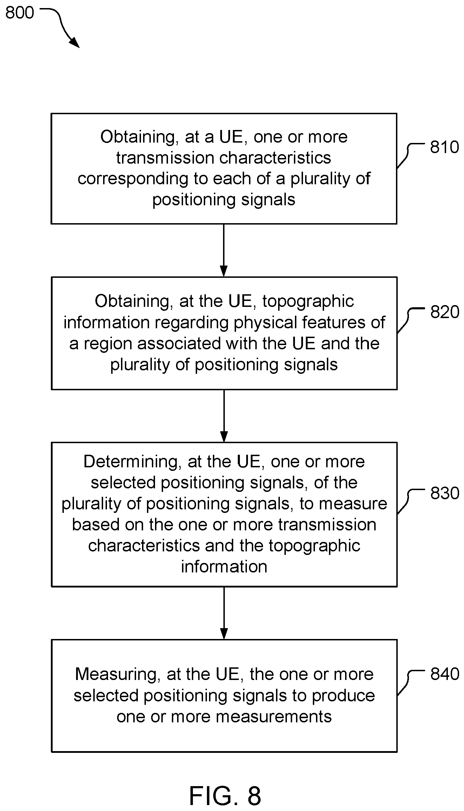

Referring to **FIG. 8****,** with further reference to FIGS. 1-7, a method 800 of measuring positioning signals at a UE includes the stages shown. The method 800 is, however, an example only and not limiting. The method 800 may be altered, e.g., by having stages added, removed, rearranged, combined, performed concurrently, and/or having single stages split into multiple stages. For example, a stage of determining a position of the UE may be added. The method 800 may be performed by a UE, which may correspond to any of the UE 105 in FIG. 1, the UE 200 in FIG. 2, or the UE 500 in FIGS. 5-7.

At stage 810, the method 800 may include obtaining, at the UE, one or more transmission characteristics corresponding to each of a plurality of positioning signals (e.g., DL PRS). For example, the processor 1010 may send, and the processor 510 may receive, the transmission characteristic(s) in the provide assistance data message 752. For each positioning signal of the plurality of positioning signals, the transmission characteristic(s) may, for example, include a horizontal location of a positioning signal source (e.g., a TRP 300), an elevation of the positioning signal source, a transmit power of the positioning signal (e.g., a DL PRS) transmitted by the positioning signal source (e.g., transmitted in a cell managed or supported by the positioning signal source), and/or a direction of transmission of the positioning signal. Means for obtaining the one or more transmission characteristics may comprise the processor 510, possibly in combination with the memory 530, and the transceiver 520 (e.g., the wireless receiver 244 and/or the wired receiver 254).

At stage 820, the method 800 may include obtaining, at the UE, topographic information regarding physical features of a region associated with the UE and the plurality of positioning signals. For example, the UE 500 may receive the topographic information from the network entity 1000 (or another network entity such as a TRP 300) in the provide assistance data message 752 and/or in the topographic information message 722. As another example, the processor 510 may retrieve the topographic information from the memory 530 (that the processor 510 previously received or previously determined). As another example, the processor 510 may receive one or more images from the camera 218 as topographic information, and/or may analyze the image(s) to determine topographic information. Means for obtaining the topographic information may comprise the processor 510 and the memory 530, and/or may comprise the processor 510, the memory 530, and the transceiver 520 (e.g., the wireless receiver 244 and/or the wired receiver 254), and/or the processor 510, the memory 530, and the camera 218.

At stage 830, the method 800 may include determining, at the UE, one or more selected positioning signals, of the plurality of positioning signals, to measure based on the one or more transmission characteristics and the topographic information. For example, the processor 510 may determine one or more cells, corresponding to one or more positioning signals corresponding to one or more TRPs 300, to measure as discussed above with respect to stage 770 (and thus also stage 740) of FIG. 7. The processor 510 may determine the selected positioning signal(s) by analyzing the transmission characteristic(s) and the topographic information, and/or may determine the selected positioning signal(s) by reading one or more instructions from the network entity 1000 as to which positioning signal(s) to measure, with the instruction(s) being based on the transmission characteristic(s) and topographic information. The one or more selected positioning signals may be determined such that positioning signal sources (e.g., TRPs 300) corresponding to the one or more selected positioning signals each has line of sight (LOS) with a location of the UE, where the location of the UE may be a present location or a future (e.g., expected or anticipated) location. The method 800 may include determining the future location of the UE based on at least one of a velocity, trajectory, or flight path of the UE 500 (i.e., based on the velocity and/or the trajectory and/or the flight path). The selected positioning signals may be determined such that there are sufficient selected positioning signals to determine a location estimate by trilateration, triangulation or other means (e.g., at least three selected signals, or sufficient signals to yield a location estimate of the UE 500 with less than a threshold amount of error, etc.). Determining which positioning signals and/or which cells to measure may help reduce processing power used for positioning signals that are weak, and/or multipath, or otherwise less desirable and/or more power consuming to measure than other positioning signals. This may help eliminate attempting to measure signals from TRPs 300 that are near to the UE 500 but whose positioning signals are less desirable to measure (e.g., due to NLOS) than positioning signals from TRPs 300 that are further away (e.g., which may be LOS). Means for determining the one or more selected positioning signals may comprise the processor 510 and the memory 530.

At stage 840, the method 800 may include measuring, at the UE, the one or more selected positioning signals to produce one or more measurements. For example, the processor 510 may use timing information, code information, frequency, bandwidth, a muting pattern, frequency hopping, etc. to measure the selected positioning signal(s) to produce one or more measurements. The measurement(s) may be used to determine a location of the UE 500, by the UE 500 itself and/or by the network entity 1000 and/or by another entity. Means for measuring the selected positioning signal(s) may comprise the processor 510, the memory 530, and the transceiver 520. The measurement(s) may include, for example, measurement(s) of RSTD, UE Rx-Tx, RTT, RSRP, RSRQ, and/or AOA.

The method 800 may include one or more of the following features. For example, the method 800 may include capturing one or more images and obtaining image-based positioning information based on the one or more images. For example, the camera 218 may capture one or more images and the processor 510 may analyze the image(s) to determine relative location of the UE 500 to one or more structures, e.g., buildings, and/or to determine movement of the UE 500 (e.g., to determine one or more expected locations of the UE 500), and/or to determine one or more ranges to one or more structures, and/or to determine a location of the UE 500, etc. Means for capturing the image(s) and obtaining the image-based positioning information may comprise the camera 218, the processor 510, and the memory 530. As another example, the method 800 may include determining a location of the UE based on the one or more measurements and verifying the location of the UE based on the image-based positioning information. For example, the processor 510 may analyze the selected positioning signal(s) to determine an estimated location of the UE 500 and compare this with information from the image(s) to determine whether the estimated location of the UE 500 is correct, or perhaps should be adjusted. The processor 510 and the memory 530 (and possibly the SPS receiver 217) may comprise means for determining the location of the UE based on the measurement(s) and means for verifying the location of the UE based on the image-based positioning information.

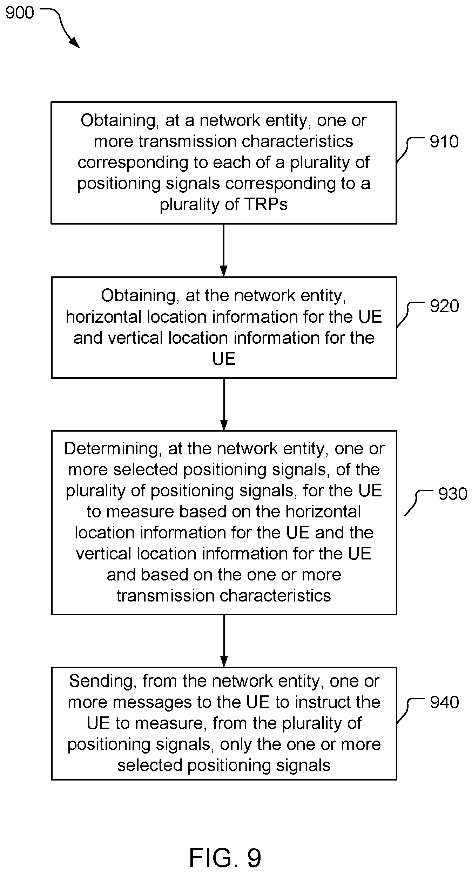

Referring to **FIG. 9****,** with further reference to FIGS. 1-8, a method 900 of providing instruction to a UE includes the stages shown. The UE may correspond to any of the UE 105 in FIG. 1, the UE 200 in FIG. 2, or the UE 500 in FIGS. 5-7. The method 900 is an example only and not limiting. The method 900 may be altered, e.g., by having stages added, removed, rearranged, combined, performed concurrently, and/or having single stages split into multiple stages. The method 900 may provide positioning signal measurement instruction to the UE. The method 900 may be performed by a network entity such as the LMF 120, an SLP, an E-SMLC, a TRP 300, a gNB 110, an LMC, the server 400, or the network entity 1000.

At stage 910, the method 900 may include obtaining, at the network entity, one or more transmission characteristics corresponding to each of a plurality of positioning signals (e.g., DL PRS) corresponding to a plurality of transmission/reception points (e.g., TRPs 300, gNBs 110). For example, the processor 1010 of the network entity 1000 may receive one or more transmission characteristics of one or more PRS signals from one or more TRPs 300 and/or from one or more gNBs 110 and/or may retrieve one or more transmission characteristics of one or more PRS signals corresponding to one or more TRPs 300 from the memory 1030. The one or more transmission characteristics may comprise a positioning signal source (e.g., the TRP 300 or the gNB 110) a horizontal location, a positioning signal source elevation, a positioning signal transmission (transmit) power, a positioning signal transmission (transmit) direction, or a combination of two or more thereof, and wherein the topographic information comprises, for each structure of one or more structures, a structure horizontal location, a structure width, and/or a structure height. Means for obtaining the transmission characteristic(s) may comprise the processor 1010 and the memory 1030, and the transceiver 1020 (e.g., the wireless receiver 444 (344) and/or the wired transceiver 454 (354)).

At stage 920, the method 900 may include obtaining, at the network entity, horizontal location information for the UE and vertical location information for the UE. For example, the network entity 1000 may receive indications of approximate horizontal and vertical location of the UE 500 from the UE 500 in the provide capabilities message 732. Means for obtaining the horizontal location for the UE and vertical location information for the UE may comprise the processor 1010 and the memory 1030, and the transceiver 1020 (e.g., the wireless receiver 444 (344) and/or the wired transceiver 454 (354)).

At stage 930, the method 900 may include determining, at the network entity, one or more selected positioning signals, of the plurality of positioning signals, for the UE to measure based on the horizontal location information for the UE and the vertical location information for the UE and based on the one or more transmission characteristics. For example, the processor 1010 may determine which positioning signal(s), e.g., as discussed with respect to stage 740, to measure corresponding to respective TRP(s) 300, e.g., to determine that the UE 500 should measure positioning signals from TRPs 300 based on whether the TRPs 300 will have line of sight with a UE location (e.g., a present or future location of the UE 500). The one or more selected positioning signals may be determined such that each positioning signal source corresponding to the one or more selected positioning signals has line of sight with the UE (e.g., at a present and/or future location of the UE). The processor 1010 may exclude NLOS (non-line-of-sight) cells (positioning signals corresponding to NLOS TRPs) even if an NLOS TRP is closer than a TRP corresponding to a signal included in the selected positioning signal(s), e.g., where the TRP corresponding to the selected positioning signal is (or will be) LOS with the UE. Means for determining the selected positioning signal(s) may comprise the processor 1010 and the memory 1030.

At stage 940, the method 900 may include sending, from the network entity, one or more messages to the UE to instruct the UE to measure, from the plurality of positioning signals, only the one or more selected positioning signals. For example, the processor 1010 may send, via the transceiver 1020, the provide assistance data message 752 to the UE 500, with the message instructing the UE 500 to measure only the PRS of the determined cell(s) or the determined positioning signals from among the available (e.g., neighboring) cells and/or available plurality of positioning signals. Means for sending the message(s) to instruct the UE may comprise the processor 1010 and the memory 1030, and the transceiver 1020 (e.g., the wireless transmitter 442 (342) and/or the wired transmitter 452 (352)).

The method 900 may include one or more of the following features. For example, the method 900 may include obtaining topographic information regarding physical features of a region associated with the UE and the plurality of positioning signals, where the one or more selected positioning signals are determined based further on the topographic information. The topographical information may be available to the network entity (e.g., in a database accessible to the network entity). The topographical information may include the locations and sizes (e.g., height, length, and breath) of buildings, structures, and natural features (e.g., trees and hills) in the region. The network entity may use the topographical information to help determine at stage 930 which positioning signals of the plurality of positioning signals will (or will likely) be LOS at the UE, which may assist determining positioning signals at stage 930, e.g., as described for stage 740 in FIG. 7. In one example, the, processor 1010 may receive topographic information from the UE 500 in the message 732 (that the UE 500 may have obtained by capturing one or more images from a camera of the UE 500) and/or may retrieve topographic information from the memory 1030 and use this information to determine which positioning signal(s) the UE 500 should measure. The processor 1010 and the memory 1030 (and possibly the transceiver 1020) may comprise means for obtaining the topographic information.

As another example, the method 900 may include obtaining expected location information for the UE, wherein the one or more selected positioning signals are determined based further on the expected location information. The expected location information may include an expected location of the UE and/or may include information from which one or more expected locations of the UE may be determined, e.g., the expected location information may include one or more locations, and/or velocity information, and/or trajectory information, and/or flight path information. The processor 510 may be configured to determine the expected location of the UE 500 based on at least one of the velocity, trajectory, or flight path of the UE 500. The processor 1010 may receive one or more expected locations from the UE 500 and/or may calculate one or more expected locations of the UE 500, e.g., based on speed, velocity, trajectory, and/or flight path information provided by the UE 500 in the message 732 and/or determined by the processor 1010 (e.g., retrieved from the memory 1030, received from an entity other than the UE 500, or calculated based on information, e.g., measurement(s) provided by the UE 500). Means for obtaining the expected location information for the UE may comprise the processor 1010 and the memory 1030, and possibly the transceiver 1020.

Also or alternatively, the method 900 may include one or more of the following features. For example, the method 900 may include configuring an event parameter and responding to the UE satisfying the event parameter by adjusting one or more of the one or more transmission characteristics for at least one of the plurality of positioning signals. For example, the processor 1010 may set a height as a condition for triggering a notification to the processor 1010. The processor 1010 may respond to the height condition being met (e.g., the UE 500 passing through the height, e.g., exceeding the height) by re-evaluating the positioning signal(s) that the UE 500 should measure and/or changing the positioning signal(s) that the UE 500 should measure. Means for configuring the event parameter and means for responding to the UE satisfying the event parameter may comprise the processor 1010, the memory 1030, and the transceiver 1020. As another example, the method 900 may include configuring one or more positioning signal muting patterns based on the horizontal location information for the UE and the vertical location information for the UE. For example, the processor 1010 may determine and instruct one or more TRPs 300 (e.g., gNBs 110) as appropriate to mute scheduled PRS transmission(s), e.g., to help avoid interference between multiple PRS signals. The processor 1010, the memory 1030, and the transceiver 1020 may comprise means for configuring one or more positioning signal muting patterns.

Also or alternatively, the method 900 may include one or more of the following features. For example, the method 900 may include obtaining an indication that the UE is an aerial UE. The processor 1010 may receive an indication, e.g., in the provide capabilities message 732 that the UE 500 is an aerial UE. Also or alternatively, the processor 1010 may receive an ID of the UE 500 (e.g., a Subscription Permanent Identifier (SUPI)) and determine (e.g., from a look-up table or from information provided by a home Unified Data Management (UDM) for the UE), that the UE 500 corresponding to that ID is an aerial UE. Still other techniques for determining that the UE is an aerial UE may be used. The network entity 1000 may take different actions based on knowing that the UE is an aerial UE, e.g., using UE height to determine cell(s) for the UE to measure, requesting flight path information, etc.

### Other considerations

Other examples and implementations are within the scope of the disclosure and appended claims. For example, due to the nature of software and computers, functions described above can be implemented using software executed by a processor, hardware, firmware, hardwiring, or a combination of any of these. Features implementing functions may also be physically located at various positions, including being distributed such that portions of functions are implemented at different physical locations.

Components, functional or otherwise, shown in the figures and/or discussed herein as being connected or communicating with each other are communicatively coupled unless otherwise noted. That is, they may be directly or indirectly connected to enable communication between them.

As used herein, the singular forms "a," "an," and "the" include the plural forms as well, unless the context clearly indicates otherwise. The terms "comprises," "comprising," "includes," and/or "including," as used herein, specify the presence of stated features, integers, steps, operations, elements, and/or components, but do not preclude the presence or addition of one or more other features, integers, steps, operations, elements, components, and/or groups thereof.

Also, as used herein, "or" as used in a list of items prefaced by "at least one of" or prefaced by "one or more of" indicates a disjunctive list such that, for example, a list of "at least one of A, B, or C," or a list of "one or more of A, B, or C" means A or B or C or AB or AC or BC or ABC (i.e., A and B and C), or combinations with more than one feature (e.g., AA, AAB, ABBC, etc.).

Also, as used herein, "or" as used in a list of items (possibly prefaced by "at least one of" or prefaced by "one or more of") indicates a disjunctive list such that, for example, a list of "at least one of A, B, or C," or a list of "one or more of A, B, or C" or a list of "A or B or C" means A, or B, or C, or AB (A and B), or AC (A and C), or BC (B and C), or ABC (i.e., A and B and C), or combinations with more than one feature (e.g., AA, AAB, ABBC, etc.). Thus, a recitation that an item, e.g., a processor, is configured to perform a function regarding at least one of A or B, or a recitation that an item is configured to perform a function A or a function B, means that the item may be configured to perform the function regarding A, or may be configured to perform the function regarding B, or may be configured to perform the function regarding A and B. For example, a phrase of "a processor configured to measure at least one of A or B" or "a processor configured to measure A or measure B" means that the processor may be configured to measure A (and may or may not be configured to measure B), or may be configured to measure B (and may or may not be configured to measure A), or may be configured to measure A and measure B (and may be configured to select which, or both, of A and B to measure). Similarly, a recitation of a means for measuring at least one of A or B includes means for measuring A (which may or may not be able to measure B), or means for measuring B (and may or may not be configured to measure A), or means for measuring A and B (which may be able to select which, or both, of A and B to measure). As another example, a recitation that an item, e.g., a processor, is configured to at least one of perform function X or perform function Y means that the item may be configured to perform the function X, or may be configured to perform the function Y, or may be configured to perform the function X and to perform the function Y. For example, a phrase of "a processor configured to at least one of measure X or measure Y" means that the processor may be configured to measure X (and may or may not be configured to measure Y), or may be configured to measure Y (and may or may not be configured to measure X), or may be configured to measure X and to measure Y (and may be configured to select which, or both, of X and Y to measure).

Substantial variations may be made in accordance with specific requirements. For example, customized hardware might also be used, and/or particular elements might be implemented in hardware, software (including portable software, such as applets, etc.) executed by a processor, or both. Further, connection to other computing devices such as network input/output devices may be employed.

As used herein, unless otherwise stated, a statement that a function or operation is "based on" an item or condition means that the function or operation is based on the stated item or condition and may be based on one or more items and/or conditions in addition to the stated item or condition.

The systems and devices discussed above are examples. Various configurations may omit, substitute, or add various procedures or components as appropriate. For instance, features described with respect to certain configurations may be combined in various other configurations. Different aspects and elements of the configurations may be combined in a similar manner. Also, technology evolves and, thus, many of the elements are examples and do not limit the scope of the disclosure or claims.

A wireless communication system is one in which communications are conveyed wirelessly, i.e., by electromagnetic and/or acoustic waves propagating through atmospheric space rather than through a wire or other physical connection. A wireless communication network may not have all communications transmitted wirelessly, but is configured to have at least some communications transmitted wirelessly. Further, the term "wireless communication device," or similar term, does not require that the functionality of the device is exclusively, or evenly primarily, for communication, or that the device be a mobile device, but indicates that the device includes wireless communication capability (one-way or two-way), e.g., includes at least one radio (each radio being part of a transmitter, receiver, or transceiver) for wireless communication.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations provides a description for implementing described techniques. Various changes may be made in the function and arrangement of elements without departing from the scope of the disclosure.

The terms "processor-readable medium," "machine-readable medium," and "computer-readable medium," as used herein, refer to any medium that participates in providing data that causes a machine to operate in a specific fashion. Using a computing platform, various processor-readable media might be involved in providing instructions/code to processor(s) for execution and/or might be used to store and/or carry such instructions/code (e.g., as signals). In many implementations, a processor-readable medium is a physical and/or tangible storage medium. Such a medium may take many forms, including but not limited to, non-volatile media and volatile media. Non-volatile media include, for example, optical and/or magnetic disks. Volatile media include, without limitation, dynamic memory.

Having described several example configurations, various modifications, alternative constructions, and equivalents may be used without departing from the scope of the disclosure. For example, the above elements may be components of a larger system, wherein other rules may take precedence over or otherwise modify the application of the invention. Also, a number of operations may be undertaken before, during, or after the above elements are considered. Accordingly, the above description does not bound the scope of the claims.

A statement that a value exceeds (or is more than or above) a first threshold value is equivalent to a statement that the value meets or exceeds a second threshold value that is slightly greater than the first threshold value, e.g., the second threshold value being one value higher than the first threshold value in the resolution of a computing system. A statement that a value is less than (or is within or below) a first threshold value is equivalent to a statement that the value is less than or equal to a second threshold value that is slightly lower than the first threshold value, e.g., the second threshold value being one value lower than the first threshold value in the resolution of a computing system.

## Claims

1. A user equipment, UE (200, 500), comprising:
a transceiver (215, 520) configured to send and receive signals wirelessly to and from a network entity (300, 400, 1000);
a memory (211, 530); and
a processor (210, 510), communicatively coupled to the transceiver and the memory, configured to:
obtain one or more transmission characteristics corresponding to each of a plurality of positioning signals;
obtain topographic information regarding physical features of a region associated with the UE and the plurality of positioning signals;
determine one or more selected positioning signals, of the plurality of positioning signals, to measure based on the one or more transmission characteristics and the topographic information; and
measure the one or more selected positioning signals to produce one or more measurements.

2. The UE of claim 1, wherein the processor is configured to determine the one or more selected positioning signals such that each positioning signal source corresponding to the one or more selected positioning signals has line of sight with a location of the UE.

3. The UE of claim 2, wherein the location of the UE is a present location of the UE or a future location of the UE.

4. The UE of claim 3, wherein the processor is configured to determine the future location of the UE based on at least one of a velocity, trajectory, or flight path of the UE, and the processor is configured to determine the one or more selected positioning signals such that there are sufficient selected positioning signals to determine a location estimate by trilateration.

5. The UE of claim 1, wherein, for each positioning signal of the plurality of positioning signals, the one or more transmission characteristics comprise a horizontal location of a positioning signal source, or an elevation of the positioning signal source, or a transmit power of the positioning signal, or a direction of transmission of the positioning signal, or a combination of two or more thereof, and wherein the topographic information comprises, for each structure of one or more structures, a structure horizontal location, a structure width, and a structure height.

6. The UE of claim 1, further comprising a camera communicatively coupled to the processor, wherein the processor is configured to:
obtain at least some of the topographic information from the camera; or
determine a location of the UE based on the one or more measurements, and verify the location of the UE based on one or more images provided by the camera.

7. A network entity (300, 400, 1000) comprising:
a transceiver (315, 415, 1020) configured to send and receive signals to and from a user equipment, UE (200, 500);
a memory (311, 411, 1030) ; and
a processor (310, 410, 1010), communicatively coupled to the transceiver and the memory, configured to:
obtain one or more transmission characteristics corresponding to each of a plurality of positioning signals corresponding to a plurality of transmission/reception points;
obtain horizontal location information for the UE and vertical location information for the UE;
determine one or more selected positioning signals, of the plurality of positioning signals, for the UE to measure based on the horizontal location information for the UE and the vertical location information for the UE and based on the one or more transmission characteristics; and
send one or more messages to the UE to instruct the UE to measure, from the plurality of positioning signals, only the one or more selected positioning signals.

8. The network entity of claim 7, wherein the processor is further configured to obtain topographic information regarding physical features of a region associated with the UE and the plurality of positioning signals, and wherein the processor is configured to determine the one or more selected positioning signals based further on the topographic information.

9. The network entity of claim 8, wherein the processor is configured to determine the one or more selected positioning signals such that each positioning signal source corresponding to the one or more selected positioning signals has line of sight with the UE.

10. The network entity of claim 8, wherein for each of the plurality of positioning signals, the one or more transmission characteristics comprise a positioning signal source horizontal location, or a positioning signal source elevation, or a transmit power, or a combination of two or more thereof, and wherein the topographic information comprises, for each structure of one or more structures, a structure horizontal location, a structure width, and a structure height.

11. The network entity of claim 7, wherein the processor is further configured to obtain expected location information for the UE, and wherein the processor is configured to determine the one or more selected positioning signals based further on the expected location information, preferably,
wherein the expected location information is an expected location of the UE, and wherein the processor is configured to determine the expected location of the UE based on at least one of a velocity, trajectory, or flight path of the UE.

12. The network entity of claim 7, wherein the processor is further configured to:
configure an event parameter; and
respond to the UE satisfying the event parameter by adjusting one or more of the one or more transmission characteristics for at least one of the plurality of positioning signals.

13. The network entity of claim 7, wherein the processor is further configured to configure one or more positioning signal muting patterns based on the horizontal location information for the UE and the vertical location information for the UE.

14. A method of measuring positioning signals at a user equipment, UE (200, 500), the method comprising:
obtaining (810), at the UE, one or more transmission characteristics corresponding to each of a plurality of positioning signals;
obtaining (820), at the UE, topographic information regarding physical features of a region associated with the UE and the plurality of positioning signals;
determining (830), at the UE, one or more selected positioning signals, of the plurality of positioning signals, to measure based on the one or more transmission characteristics and the topographic information; and
measuring (840), at the UE, the one or more selected positioning signals to produce one or more measurements.

15. A method of providing instruction to a user equipment, UE (200, 500), the method comprising:
obtaining (910), at a network entity (300, 400, 1000), one or more transmission characteristics corresponding to each of a plurality of positioning signals corresponding to a plurality of transmission/reception points;
obtaining (920), at the network entity, horizontal location information for the UE and vertical location information for the UE;
determining (930), at the network entity, one or more selected positioning signals, of the plurality of positioning signals, for the UE to measure based on the horizontal location information for the UE and the vertical location information for the UE and based on the one or more transmission characteristics; and
sending (940), from the network entity, one or more messages to the UE to instruct the UE to measure, from the plurality of positioning signals, only the one or more selected positioning signals.

## Patentansprüche

1. UE (User Equipment) (200, 500), das Folgendes umfasst:
einen Transceiver (215, 520), konfiguriert zum drahtlosen Senden und Empfangen von Signalen zu/von einer Netzwerkentität (300, 400, 1000);
einen Speicher (211, 530); und
einen Prozessor (210, 510), der mit dem Transceiver und dem Speicher kommunikativ gekoppelt und konfiguriert ist zum:
Erhalten einer oder mehrerer Übertragungscharakteristiken entsprechend jedem von mehreren Ortungssignalen;
Erhalten topografischer Informationen bezüglich physikalischer Merkmale einer mit dem UE und den mehreren Ortungssignalen assoziierten Region;
Bestimmen eines oder mehrerer ausgewählter Ortungssignale aus der Mehrzahl von Ortungssignalen zum Messen auf der Basis der ein oder mehreren Übertragungscharakteristiken und der topografischen Informationen; und
Messen der ein oder mehreren ausgewählten Ortungssignale zum Produzieren eines oder mehrerer Messwerte.

2. UE nach Anspruch 1, wobei der Prozessor zum Bestimmen der ein oder mehreren ausgewählten Ortungssignale konfiguriert ist, so dass jede Ortungssignalquelle entsprechend den ein oder mehreren ausgewählten Ortungssignalen Sichtverbindung zu einem Standort des UE hat.

3. UE nach Anspruch 2, wobei der Standort des UE ein aktueller Standort des UE oder ein zukünftiger Standort des UE ist.

4. UE nach Anspruch 3, wobei der Prozessor zum Bestimmen des zukünftigen Standorts des UE auf der Basis von mindestens einem von einer/m Geschwindigkeit, Trajektorie oder Flugweg des UE konfiguriert ist und der Prozessor zum Bestimmen der ein oder mehreren ausgewählten Ortungssignale konfiguriert ist, so dass genügend ausgewählte Ortungssignale vorhanden sind, um eine Standortschätzung durch Trilateration zu bestimmen.

5. UE nach Anspruch 1, wobei für jedes der mehreren Ortungssignale die ein oder mehreren Übertragungscharakteristiken einen horizontalen Standort einer Ortungssignalquelle oder eine Höhe der Ortungssignalquelle oder eine Sendeleistung des Ortungssignals oder eine Senderichtung des Ortungssignals oder eine Kombination aus zwei oder mehr davon umfassen, und wobei die topografischen Informationen für jede von einer oder mehreren Konstruktionen einen horizontalen Standort der Konstruktion, eine Breite der Konstruktion und eine Höhe der Konstruktion umfassen.

6. UE nach Anspruch 1, das ferner eine mit dem Prozessor kommunikativ gekoppelte Kamera umfasst, wobei der Prozessor konfiguriert ist zum:
Erhalten zumindest einiger der topografischen Informationen von der Kamera; oder
Bestimmen eines Standorts des UE auf der Basis der ein oder mehreren Messwerte und Verifizieren des Standorts des UE auf der Basis von einem oder mehreren von der Kamera bereitgestellten Bildern.

7. Netzwerkentität (300, 400, 1000), die Folgendes umfasst:
einen Transceiver (315, 415, 1020), konfiguriert zum Senden und Empfangen von Signalen zu/von einem UE (User Equipment) (200, 500);
einen Speicher (311, 411, 1030); und
einen Prozessor (310, 410, 1010), der mit dem Transceiver und dem Speicher kommunikativ gekoppelt und konfiguriert ist zum:
Erhalten einer oder mehrerer Übertragungscharakteristiken entsprechend jedem von mehreren Ortungssignalen entsprechend mehreren Sende-/Empfangspunkten;
Erhalten horizontaler Standortinformationen für das UE und vertikaler Standortinformationen für das UE;
Bestimmen eines oder mehrerer ausgewählter Ortungssignale aus der Mehrzahl von Ortungssignalen für das UE zum Messen auf der Basis der horizontalen Standortinformationen für das UE und der vertikalen Standortinformationen für das UE sowie auf der Basis der ein oder mehreren Übertragungscharakteristiken; und
Senden einer oder mehrerer Nachrichten zu dem UE zum Anweisen des UE, aus den mehreren Ortungssignalen nur die ein oder mehreren ausgewählten Ortungssignale zu messen.

8. Netzwerkentität nach Anspruch 7, wobei der Prozessor ferner zum Erhalten topografischer Informationen bezüglich physikalischer Merkmale einer mit dem UE assoziierten Region und der mehreren Ortungssignale konfiguriert ist, und wobei der Prozessor zum Bestimmen der ein oder mehreren ausgewählten Ortungssignale ferner auf der Basis der topografischen Informationen konfiguriert ist.

9. Netzwerkentität nach Anspruch 8, wobei der Prozessor zum Bestimmen der ein oder mehreren ausgewählten Ortungssignale konfiguriert ist, so dass jede Ortungssignalquelle entsprechend den ein oder mehreren ausgewählten Ortungssignalen Sichtverbindung zum UE hat.

10. Netzwerkentität nach Anspruch 8, wobei für jedes der mehreren Ortungssignale die ein oder mehreren Übertragungscharakteristiken einen horizontalen Standort der Ortungssignalquelle oder eine Höhe der Ortungssignalquelle oder eine Sendeleistung oder eine Kombination aus zwei oder mehr davon umfassen, und wobei die topografischen Informationen für jede von einer oder mehreren Konstruktionen einen horizontalen Standort der Konstruktion, eine Breite der Konstruktion und eine Höhe der Konstruktion umfassen.

11. Netzwerkentität nach Anspruch 7, wobei der Prozessor ferner zum Erhalten erwarteter Standortinformationen für das UE konfiguriert ist, und wobei der Prozessor zum Bestimmen der ein oder mehreren ausgewählten Ortungssignale ferner auf der Basis der erwarteten Standortinformationen konfiguriert ist, wobei vorzugsweise
die erwarteten Standortinformationen einen erwarteten Standort des UE darstellen und wobei der Prozessor zum Bestimmen des erwarteten Standorts des UE auf der Basis von mindestens einem von einer/m Geschwindigkeit, Trajektorie oder Flugweg des UE konfiguriert ist.

12. Netzwerkentität nach Anspruch 7, wobei der Prozessor ferner konfiguriert ist zum:
Konfigurieren eines Ereignisparameters; und
Reagieren auf das Erfüllen des Ereignisparameters durch das UE durch Justieren einer oder mehrerer der ein oder mehreren Übertragungscharakteristiken für mindestens eines der mehreren Ortungssignale.

13. Netzwerkentität nach Anspruch 7, wobei der Prozessor ferner zum Konfigurieren eines oder mehrerer Ortungssignal-Muting-Muster auf der Basis der horizontalen Standortinformationen für das UE und der vertikalen Standortinformationen für das UE konfiguriert ist.

14. Verfahren zum Messen von Positionssignalen an einem UE (User Equipment) (200, 500), wobei das Verfahren Folgendes beinhaltet:
Erhalten (810), am UE, einer oder mehrerer Übertragungscharakteristiken entsprechend jedem von mehreren Ortungssignalen;
Erhalten (820), am UE, topografischer Informationen bezüglich physikalischer Merkmale einer mit dem UE und den mehreren Ortungssignalen assoziierten Region;
Bestimmen (830), am UE, eines oder mehrerer ausgewählter Ortungssignale aus der Mehrzahl von Ortungssignalen zum Messen auf der Basis der ein oder mehreren Übertragungscharakteristiken und der topografischen Informationen; und
Messen (840), am UE, der ein oder mehreren ausgewählten Ortungssignale zum Produzieren eines oder mehrerer Messwerte.

15. Verfahren zum Bereitstellen von Befehlen für ein UE (User Equipment) (200, 500), wobei das Verfahren Folgendes beinhaltet:
Erhalten (910), an einer Netzwerkentität (300, 400, 1000), einer oder mehrerer Übertragungscharakteristiken entsprechend jedem von mehreren Ortungssignalen entsprechend mehreren Sende-/Empfangspunkten;
Erhalten (920), an der Netzwerkentität, horizontaler Standortinformationen für das UE und vertikaler Standortinformationen für das UE;
Bestimmen (930), an der Netzwerkentität, eines oder mehrerer ausgewählter Ortungssignale aus der Mehrzahl von Ortungssignalen für das UE zum Messen auf der Basis der horizontalen Standortinformationen für das UE und der vertikalen Standortinformationen für das UE sowie auf der Basis der ein oder mehreren Übertragungscharakteristiken; und
Senden (940), von der Netzwerkentität, einer oder mehrerer Nachrichten zu dem UE zum Anweisen des UE, aus den mehreren Ortungssignalen nur die ein oder mehreren ausgewählten Ortungssignale zu messen.

## Revendications

1. Équipement utilisateur, UE (200, 500), comprenant :
un émetteur-récepteur (215, 520) configuré pour envoyer et recevoir des signaux sans fil vers et depuis une entité de réseau (300, 400, 1000) ;
une mémoire (211, 530) ; et
un processeur (210, 510), couplé en communication au récepteur et à la mémoire, configuré pour :
obtenir une ou plusieurs caractéristiques de transmission correspondant à chacun d'une pluralité de signaux de positionnement ;
obtenir des informations topographiques concernant des caractéristiques physiques d'une région associée à l'UE et à la pluralité de signaux de positionnement ;
déterminer un ou plusieurs signaux de positionnement sélectionnés, de la pluralité de signaux de positionnement, à mesurer sur la base des une ou plusieurs caractéristiques de transmission et des informations topographiques ; et
mesurer les un ou plusieurs signaux de positionnement sélectionnés pour produire une ou plusieurs mesures.

2. UE selon la revendication 1, dans lequel le processeur est configuré pour déterminer les un ou plusieurs signaux de positionnement sélectionnés de telle sorte que chaque source de signal de positionnement correspondant aux un ou plusieurs signaux de positionnement sélectionnés ait une visibilité directe avec un emplacement de l'UE

3. UE selon la revendication 2, dans lequel l'emplacement de l'UE est un emplacement actuel de l'UE ou un emplacement futur de l'UE.

4. UE selon la revendication 3, dans lequel le processeur est configuré pour déterminer l'emplacement futur de l'UE sur la base d'au moins une d'une vélocité, d'une trajectoire ou d'une trajectoire de vol de l'UE, et le processeur est configuré pour déterminer les un ou plusieurs signaux de positionnement sélectionnés de telle sorte qu'il existe suffisamment de signaux de positionnement sélectionnés pour déterminer une estimation d'emplacement par trilatération.

5. UE selon la revendication 1, dans lequel, pour chaque signal de positionnement de la pluralité de signaux de positionnement, les une ou plusieurs caractéristiques de transmission comprennent un emplacement horizontal d'une source de signal de positionnement, ou une élévation de la source de signal de positionnement, ou une puissance de transmission du signal de positionnement, ou une direction de transmission du signal de positionnement, ou une combinaison de deux de ces caractéristiques ou plus, et dans lequel les informations topographiques comprennent, pour chaque structure d'une ou plusieurs structures, un emplacement horizontal de structure, une largeur de structure et une hauteur de structure.

6. UE selon la revendication 1, comprenant en outre une caméra couplée en communication au processeur, dans lequel le processeur est configuré pour :
obtenir au moins une partie des informations topographiques à partir de la caméra ; ou
déterminer un emplacement de l'UE sur la base des une ou plusieurs mesures, et vérifier l'emplacement de l'UE à partir d'une ou plusieurs images fournies par la caméra.

7. Entité de réseau (300, 400, 1000) comprenant :
un émetteur-récepteur (315, 415, 1020) configuré pour envoyer et recevoir des signaux vers et depuis un équipement utilisateur, UE (200, 500) ;
une mémoire (311, 411, 1030) ; et
un processeur (310, 410, 1010), couplé en communication à l'émetteur-récepteur et à la mémoire, configuré pour :
obtenir une ou plusieurs caractéristiques de transmission correspondant à chacun d'une pluralité de signaux de positionnement correspondant à une pluralité de points de transmission/réception ;
obtenir des informations d'emplacement horizontal de l'UE et des informations d'emplacement vertical de l'UE ;
déterminer un ou plusieurs signaux de positionnement sélectionnés, de la pluralité de signaux de positionnement, censés être mesurés par l'UE sur la base des informations d'emplacement horizontal de l'UE et des informations d'emplacement vertical de l'UE, et sur la base des une ou plusieurs caractéristiques de transmission ; et
envoyer un ou plusieurs messages à l'UE pour ordonner à l'UE de mesurer, parmi la pluralité de signaux de positionnement, seulement les un ou plusieurs signaux de positionnement sélectionnés.

8. Entité de réseau selon la revendication 7, dans laquelle le processeur est configuré en outre pour obtenir des informations topographiques concernant des caractéristiques physiques d'une région associée à l'UE et à la pluralité de signaux de positionnement, et dans laquelle le processeur est configuré pour déterminer les un ou plusieurs signaux de positionnement sélectionnés sur la base en outre des informations topographiques.

9. Entité de réseau selon la revendication 7, dans laquelle le processeur est configuré pour déterminer les un ou plusieurs signaux de positionnement sélectionnés de telle sorte que chaque source de signal de positionnement correspondant aux un ou plusieurs signaux de positionnement sélectionnés ait une visibilité directe avec l'UE.

10. Entité de réseau selon la revendication 8, dans laquelle, pour chacun de la pluralité de signaux de positionnement, les une ou plusieurs caractéristiques de transmission comprennent un emplacement horizontal de source de signal de positionnement, ou une élévation de source de signal de positionnement, ou une puissance d'émission, ou une combinaison de deux de ces caractéristiques ou plus, et dans laquelle les informations topographiques comprennent, pour chaque structure d'une ou plusieurs structures, un emplacement horizontal de structure, une largeur de structure et une hauteur de structure.

11. Entité de réseau selon la revendication 7, dans laquelle le processeur est configuré en outre pour obtenir des informations d'emplacement escompté de l'UE, et dans laquelle le processeur est configuré pour déterminer les un ou plusieurs signaux de positionnement sélectionnés sur la base en outre des informations d'emplacement escompté, de préférence
dans laquelle les informations d'emplacement escompté sont un emplacement escompté de l'UE, et dans laquelle le processeur est configuré pour déterminer l'emplacement escompté de l'UE sur la base d'au moins une d'une vélocité, d'une trajectoire ou d'une trajectoire de vol de l'UE.

12. Entité de réseau selon la revendication 7, dans laquelle le processeur est configuré en outre pour :
configurer un paramètre d'événement ; et
répondre à l'UE qui satisfait le paramètre d'événement en ajustant une ou plusieurs des caractéristiques de transmission pour au moins un de la pluralité de signaux de positionnement.

13. Entité de réseau selon la revendication 7, dans laquelle le processeur est configuré en outre pour configurer un ou plusieurs schémas de blocage de signal de positionnement sur la base des informations d'emplacement horizontal de l'UE et des informations d'emplacement vertical de l'UE.

14. Procédé de mesure de signaux de positionnement au niveau d'un équipement utilisateur, UE (200, 500), comprenant :
l'obtention (810), au niveau de l'UE, d'une ou plusieurs caractéristiques de transmission correspondant à chacun d'une pluralité de signaux de positionnement ;
l'obtention (820), au niveau de l'UE, d'informations topographiques concernant des caractéristiques physiques d'une région associée à l'UE et à la pluralité de signaux de positionnement ;
la détermination (830), au niveau de l'UE, d'un ou plusieurs signaux de positionnement sélectionnés, de la pluralité des signaux de positionnement, à mesurer sur la base des une ou plusieurs caractéristiques de transmission et des informations topographiques ; et
la mesure (840), au niveau de l'UE, des un ou plusieurs signaux de positionnement sélectionnés pour produire une ou plusieurs mesures.

15. Procédé de fourniture d'instructions à un équipement utilisateur, UE (200, 500), comprenant :
l'obtention (910), au niveau d'une entité de réseau (300, 400, 1000), d'une ou plusieurs caractéristiques de transmission correspondant à chacun d'une pluralité de signaux de positionnement correspondant à une pluralité de points de transmission/réception ;
l'obtention (920), au niveau de l'entité de réseau, d'informations d'emplacement horizontal de l'UE et d'informations d'emplacement vertical de l'UE ;
la détermination (930), au niveau d'une entité de réseau, d'un ou plusieurs signaux de positionnement sélectionnés, de la pluralité des signaux de positionnement, censés être mesurés par l'UE sur la base des informations d'emplacement horizontal de l'UE et des informations d'emplacement vertical de l'UE, et sur la base des une ou plusieurs caractéristiques de transmission ; et
l'envoi (940), à partir de l'entité réseau, d'un ou plusieurs messages à l'UE pour ordonner à l'UE de mesurer, parmi la pluralité des signaux de positionnement, seulement les un ou plusieurs signaux de positionnement sélectionnés.
